# EUROPEAN PATENT APPLICATION

(11) **EP 4 435 467 A1**
(43) Date of publication of application: **25.09.2024**
(21) Application number: 23193419.1
(22) Date of filing: 25.08.2023
(51) Int. Cl.: G01S 7/481, G01S 17/42, G01S 17/931

(54) **RANGING DEVICE AND RANGING SYSTEM**

(30) Priority: 23.03.2023 JP 2023046677
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: KIMURA, Katsuyuki, Minato-ku, Tokyo, 105-0023 (JP); KUBOTA, Hiroshi, Minato-ku, Tokyo, 105-0023 (JP); JOBASHI, Masashi, Minato-ku, Tokyo, 105-0023 (JP); HADA, Ryuji, Minato-ku, Tokyo, 105-0023 (JP); NAKANO, Takahisa, Kawasaki-shi, Kanagawa, 212-0013 (JP); KOBAYASHI, Hiroyuki, Kawasaki-shi, Kanagawa, 212-0013 (JP); TAKAHASHI, Yusuke, Kawasaki-shi, Kanagawa, 212-0013 (JP); OODAKE, Tatsuya, Kawasaki-shi, Kanagawa, 212-0013 (JP); SETO, Naoto, Kawasaki-shi, Kanagawa, 212-0013 (JP); SUZUKI, Yoshihiko, Kawasaki-shi, Kanagawa, 212-0013 (JP)
(74) Representative: Hoffmann Eitle

(57) **Abstract**

According to one arrangement, a ranging device includes a light source, an optical sensor, a measurement circuit, and a control circuit. The light source is configured to emit first laser light. The optical sensor is configured to detect second laser light corresponding to the first laser light reflected by an external subject. The measurement circuit is configured to measure a distance to the subject based on a timing at which the light source emits the first laser light and a timing at which the optical sensor detects the second laser light. The control circuit is configured to control a number of ranging points indicating a number of distances measured per unit time by the measurement circuit in a predetermined area within an angle of view of the ranging device.

## Description

### FIELD

Arrangements described herein relate generally to a ranging device and a ranging system.

### BACKGROUND

A ranging device called light detection and ranging (LiDAR) is known. LiDAR causes its laser light source to emit laser light toward a ranging target. Emitted laser light is reflected by the ranging target and is detected by an optical sensor of LiDAR. In this manner, LiDAR calculates a time of flight (ToF) of laser light based on a difference between the time at which the laser light is emitted and the time at which the laser light reflected by the ranging target is detected. A distance between LiDAR and the ranging target can be measured (ranged) based on the time of flight of laser light and the speed of the laser light. Such a measurement method is also called a "ToF system".

LiDAR using such a ToF system is generally used as a ranging device that performs a long-distance ranging. However, there is a limit to the amount of laser light emitted under the ToF system. That is, in the case of LiDAR mounted with a laser light source, the amount of emitted laser light is limited to the amount of light emitted by the laser light source mounted on the LiDAR. Mounting multiple laser light sources on LiDAR achieves improved performance but directly affects the cost of the LiDAR. For this reason, it is difficult for a commonly used LiDAR to significantly increase the number of laser sources.

As described above, due to the limited amount of laser light emitted under the ToF system, in LiDAR, the number of distances that can be acquired per unit time within a predetermined angle of view (hereinafter referred to as "the number of ranging points") and the ranging distance performance are in a trade-off relationship. That is, the number of the ranging points can be increased as long as the ranging performance for a longer distance is not pursued, and the ranging performance for a longer distance can be achieved in the case where the number of the ranging points is reduced. The number of the ranging points measured per unit time can be expressed by, for example, the resolution × the ranging frequency.

In addition, to realize ranging, LiDAR needs to be able to cause its optical sensor to detect laser light emitted from its laser light source and reflected back by a ranging target. Laser light reflected back by a ranging target is attenuated. In this respect, the attenuation of the laser light increases as a distance between LiDAR and the ranging target increases. This requires the attenuated laser light to be greater than noise caused by light of an external light source such as sunlight.

### BRIEF DESCRIPTION OF THE DRAWINGS

FIG. 1 is a schematic diagram showing an example of a configuration of a ranging system according to a first arrangement.
FIG. 2 is a block diagram showing an example of a configuration of an information processing device included in the ranging system according to the first arrangement.
FIG. 3 is a block diagram showing an example of a configuration of a ranging device according to the first arrangement.
FIG. 4 is a schematic diagram showing an example of a configuration of an optical system included in the ranging device according to the first arrangement.
FIG. 5 is a schematic diagram showing an example of a configuration of a scan area that is scannable by the ranging device according to the first arrangement.
FIG. 6 is a schematic diagram showing an example of a configuration of an optical sensor included in the ranging device according to the first arrangement.
FIG. 7 is a schematic diagram showing an example of a two-dimensional pixel area that is obtainable through scanning by the ranging device according to the first arrangement.
FIG. 8 is a diagram showing an example of a waveform of a pulse signal received by the optical sensor included in the ranging device according to the first arrangement.
FIG. 9 is a diagram showing another example of a waveform of a pulse signal received by the optical sensor included in the ranging device according to the first arrangement.
FIG. 10 is a diagram illustrating an example of the number of ranging points obtained by a measurement device included in the ranging device according to the first arrangement.
FIG. 11 is a diagram illustrating another example of the number of ranging points obtained by the measurement device included in the ranging device according to the first arrangement.
FIG. 12 is a block diagram showing an example of a functional configuration of the ranging system according to the first arrangement.
FIG. 13 is a flowchart showing an example of ranging operation of the ranging device according to the first arrangement.
FIG. 14 is a diagram showing an example of setting of an integration number within an angle of view of a ranging device according to a first modification of the first arrangement.
FIG. 15 is a block diagram showing an example of a functional configuration of a ranging system according to the first modification of the first arrangement.
FIG. 16 is a flowchart showing an example of ranging operation of the ranging device according to the first modification of the first arrangement.
FIG. 17 is a diagram showing an example of setting of an integration number within an angle of view of a ranging device according to a second modification of the first arrangement.
FIG. 18 is a diagram showing an example of setting of an integration number within an angle of view of a ranging device according to a third modification of the first arrangement.
FIG. 19 is a schematic diagram showing an example of a configuration of a ranging system according to a second arrangement.
FIG. 20 is a block diagram showing an example of a functional configuration of the ranging system according to the second arrangement.
FIG. 21 is a flowchart showing an example of ranging operation of a ranging device according to the second arrangement.
FIG. 22 is a block diagram showing an example of a functional configuration of a ranging system according to a modification of the second arrangement.
FIG. 23 is a flowchart showing an example of ranging operation of a ranging device according to the modification of the second arrangement.
FIG. 24 is a block diagram showing an example of a configuration of a ranging device according to a third arrangement.
FIG. 25 is a diagram illustrating an example of weather determination processing performed by a weather determination device included in the ranging device according to the third arrangement.
FIG. 26 is a block diagram showing an example of a functional configuration of a ranging system according to the third arrangement.
FIG. 27 is a flowchart showing an example of weather determination operation of the ranging device according to the third arrangement.
FIG. 28 is a flowchart showing an example of ranging operation of the ranging device according to the third arrangement.
FIG. 29 is a diagram illustrating an example of weather determination processing performed by a weather determination device included in a ranging device according to a first modification of the third arrangement.
FIG. 30 is a block diagram showing an example of a functional configuration of a ranging system according to the first modification of the third arrangement.
FIG. 31 is a flowchart showing an example of weather determination operation of the ranging device according to the first modification of the third arrangement.
FIG. 32 is a block diagram showing an example of a functional configuration of a ranging system according to a second modification of the third arrangement.
FIG. 33 is a flowchart showing an example of weather determination operation of a ranging device according to the second modification of the third arrangement.
FIG. 34 is a schematic diagram showing an example of a configuration of a ranging system according to a third modification of the third arrangement.

### DETAILED DESCRIPTION

In general, according to one arrangement, a ranging device includes a light source, an optical sensor, a measurement circuit, and a control circuit. The light source is configured to emit first laser light. The optical sensor is configured to detect second laser light corresponding to the first laser light reflected by an external subject. The measurement circuit is configured to measure a distance to the subject based on a timing at which the light source emits the first laser light and a timing at which the optical sensor detects the second laser light. The control circuit is configured to control a number of ranging points indicating a number of distances measured per unit time by the measurement circuit in a predetermined area within an angle of view of the ranging device.

Hereinafter, each arrangement will be described with reference to the accompanying drawings. Each arrangement illustrates a device and a method for embodying the technical idea of the invention. The drawings are either schematic or conceptual. The dimensions, ratios, etc. in the drawings are not always the same as the actual ones. In the following description, constituent elements having substantially the same function and configuration will be assigned the same reference symbol.

### <1> First Arrangement

Hereinafter, a ranging system 1 according to a first arrangement will be described.

### <1-1> Configuration

### <1-1-1> Configuration of Ranging System 1

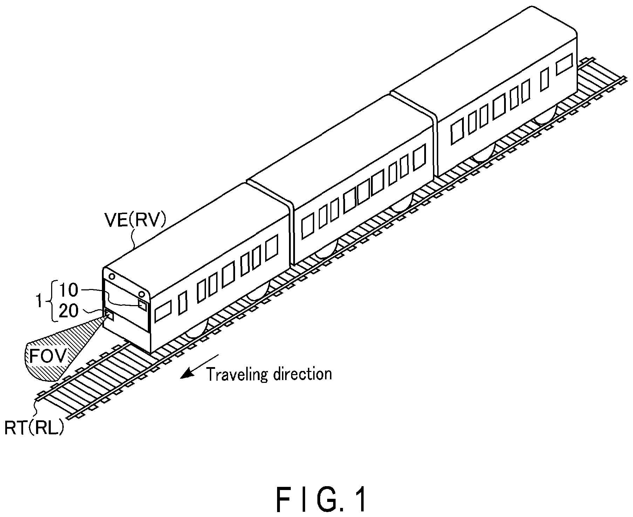

FIG. 1 is a schematic diagram showing an example of a configuration of the ranging system 1 according to the first arrangement. FIG. 1 shows a situation in which transport equipment VE provided with the ranging system 1 is traveling in a traveling direction indicated by an arrow on a predetermined route RT. As shown in FIG. 1, the ranging system 1 includes an information processing device 10 and a ranging device 20. In the example of FIG. 1, the transport equipment VE is a railway vehicle RV, and the predetermined route RT is a track RL. The transport equipment VE provided with the ranging system 1 is not necessarily a railway vehicle RV, and may be, for example, a vehicle, a bus, etc. In the case where the transport equipment VE is a vehicle or bus, the predetermined route RT is a predetermined road (for example, a road in which an area allowing the vehicle or bus to travel therein is defined by a section line, etc.).

The information processing device 10 includes, for example, a device that collects information such as a current position, a state, and surrounding environments of the transport equipment VE. As shown in FIG. 1, the information processing device 10 is installed (mounted) in front of the transport equipment VE, for example. Furthermore, the information processing device 10 is configured to control the ranging device 20. The information processing device 10 may be configured to control the transport equipment VE in terms of acceleration/deceleration, a traveling direction, etc. That is, the information processing device 10 may have a function of supporting autonomous travel of the transport equipment VE.

The ranging device 20 is a type of LiDAR. The ranging device 20 emits laser light and detects the laser light reflected by a subject (ranging target). The ranging device 20 then measures a distance between the ranging device 20 and the subject based on a time (timing) at which the laser light is emitted and a time (timing) at which the laser light is detected. As shown in FIG. 1, the ranging device 20 is installed, for example, in front of the transport equipment VE, and acquires distance information (hereinafter referred to as "ranging information") within a predetermined angle of view in the traveling direction of the transport equipment VE. Throughout this description, the angle of view of the ranging device 20, that is, a range in which ranging is performed by the ranging device 20, will also be referred to as a "FOV (Field Of View)". Furthermore, the ranging device 20 may change the number of the ranging points based on the speed of the transport equipment VE.

### <1-1-2> Configuration of Information Processing Device 10

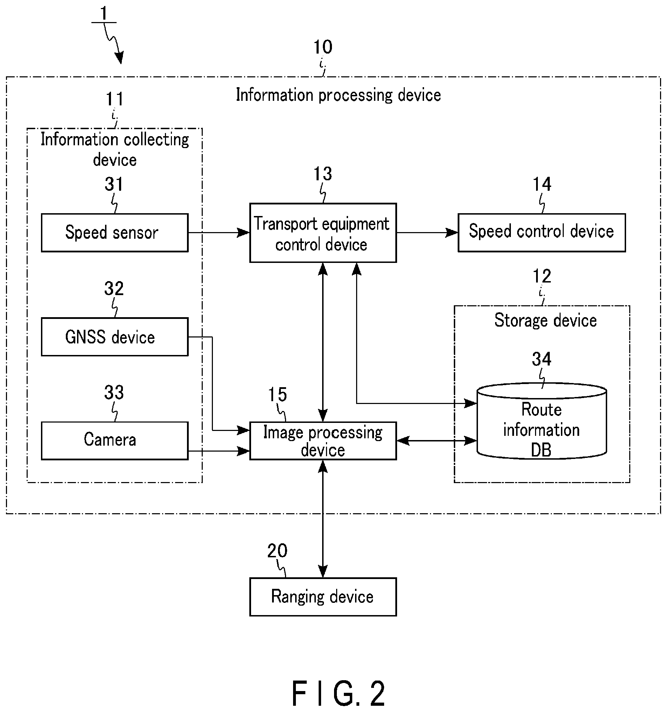

FIG. 2 is a block diagram showing an example of the configuration of the information processing device 10 included in the ranging system 1 according to the first arrangement. FIG. 2 shows the ranging device 20, too. As shown in FIG. 2, the information processing device 10 includes, for example, an information collecting device 11, a storage device 12, a transport equipment control device 13, a speed control device 14, and an image processing device 15.

The information collecting device 11 is a device that collects information such as a current position, a state, and surrounding environments of the transport equipment VE. The information collecting device 11 includes, for example, a speed sensor 31, a global navigation satellite system (GNSS) device 32, and a camera 33. The speed sensor 31, the GNSS device 32, and the camera 33 are a group of devices for collecting information such as a current position, a state, and surrounding environments of the transport equipment VE.

The speed sensor 31 is a sensor that detects the current speed of the transport equipment VE. The speed sensor 31 transmits the detected speed to the transport equipment control device 13.

The GNSS device 32 is a positioning device that receives radio waves emitted by a plurality of artificial satellites and specifies a current position of the transport equipment VE based on the received radio waves. The GNSS device 32 includes, for example, a receiving device that converts satellite signals into digital data, a receiving antenna for receiving satellite signals, an autonomous measurement device such as an acceleration sensor or a gyro sensor, a calculation processing device that calculates the current position from satellite signals, and memory device. The calculation processing device calculates a current position of the transport equipment VE based on, for example, satellite signals, a speed obtained from the speed sensor 31, and an acceleration obtained from the acceleration sensor. The GNSS device 32 transmits the current position of the transport equipment VE calculated based on the satellite signals to the image processing device 15.

The camera 33 is an optical device capable of photographing images in the vicinity of the transport equipment VE. The camera 33 is installed, for example, in front of the transport equipment VE. The camera 33 transmits a photographed image to the image processing device 15.

The storage device 12 is a storage medium used in storing data, programs, etc. The storage device 12 stores, for example, a route information database (DB) 34 that includes information on the route RT allowing the transport equipment VE to travel thereon (hereinafter referred to as "route information"). The information stored in the storage device 12 may be downloaded via a server on the network.

The route information database 34 stores route information, information on operation of the transport equipment VE (hereinafter referred to as "operation information"), information on an FOV (hereinafter referred to as "FOV information"), etc. Examples of the route information include a distance from a start point on the route RT on which the transport equipment VE travels. Examples of the operation information include a speed limit of the transport equipment VE, a location ST in which the transport equipment VE is to be stopped (hereinafter referred to as "stop location ST"), and a stop position in the stop location ST. In the case where the transport equipment VE is the railway vehicle RV, the stop location ST is, for example, a station. In the case where the transport equipment VE is a vehicle or a bus, the stop location ST is, for example, a stop. The operation information is set in accordance with, for example, a distance from a start point on the route RT or a current position of the transport equipment VE. Examples of the FOV information include a parameter that defines FOV. The FOV information is set based on, for example, the route information and the operation information.

The transport equipment control device 13 is a computer configured to communicate with the image processing device 15, for example. The transport equipment control device 13 generates a control signal concerning the acceleration/deceleration of the transport equipment VE based on, for example, the speed obtained from the speed sensor 31, an instruction from the image processing device 15, information obtained from the image processing device 15, the operation information obtained from the route information database 34, etc. The information obtained from the image processing device 15 includes, for example, a current position of the transport equipment VE. The transport equipment control device 13 then transmits the generated control signal to the speed control device 14. In this manner, the transport equipment control device 13 controls travel of the transport equipment VE by stopping the transport equipment VE, adjusting its speed between a previous stop location ST and a next stop location ST, or the like.

The speed control device 14 is a device that controls the speed of the transport equipment VE. The speed control device 14 includes, for example, acceleration means and deceleration means for adjusting the speed of the transport equipment VE. The speed control device 14 controls the stopping or the acceleration/deceleration of the transport equipment VE based on the control signal received from the transport equipment control device 13. For example, the speed control device 14 controls a motor or an engine, or a brake connected to wheels of the transport equipment VE.

The image processing device 15 is a computer configured to communicate with the transport equipment control device 13, for example. For example, the image processing device 15 generates an image based on the ranging information obtained from the ranging device 20. Furthermore, for example, the image processing device 15 corrects the current position of the transport equipment VE obtained from the GNSS device 32 using the ranging information obtained from the ranging device 20 (distance information corresponding to the number of the ranging points). The image processing device 15 then determines a distance from a start point of the transport equipment VE based on the corrected current position of the transport equipment VE, information obtained from the route information database 34 (for example, a position of a subject), and an image obtained from the camera 33. The image processing device 15 may specify the start point of the transport equipment VE based on, for example, the information obtained from the route information database 34. The distance from the start point of the transport equipment VE is, for example, a distance from the start point of the transport equipment VE to a subject (such as, e.g., an obstacle or a target) existing in front of the transport equipment VE. Throughout this description, "obstacle" indicates, for example, an object that hinders operation of the transport equipment VE. "Target" indicates, for example, a sign, etc. used in operation of the transport equipment VE. Examples of the "target" include a stop position target STG.

The image processing device 15 detects the route RT in front of the transport equipment VE based on the image obtained from the camera 33, determines an area for the transport equipment VE on the route RT to travel, and detects an obstacle existing in the area. As a result of detection of the obstacle, in the case where the transport equipment VE needs to be stopped in accordance with a distance from the start point of the transport equipment VE, the image processing device 15 instructs the transport equipment control device 13 to stop the transport equipment VE. In this manner, the transport equipment control device 13 controls travel of the transport equipment VE based on the result showing that the image processing device 15 has detected the obstacle.

Furthermore, the image processing device 15 instructs FOV of the ranging device 20 based on, for example, the FOV information obtained from the route information database 34. Yet further, the image processing device 15 transmits the speed obtained from the transport equipment control device 13 to the ranging device 20, for example.

Connection between devices within the information processing device 10 may be made through, for example, a network cable such as Ethernet (registered trademark). The information collecting device 11 and the storage device 12 may be externally connected to the information processing device 10.

The information processing device 10 may include a Central Processing Unit (CPU), a Read Only Memory (ROM), a Random Access Memory (RAM), etc. In the case where the information processing device 10 includes the CPU, for example, a CPU of the information processing device 10 may execute each processing of the transport equipment control device 13 and the image processing device 15.

The information processing device 10 may include a user interface. The user interface is an input interface for a user's use. In the case where the information processing device 10 includes such a user interface, a user may operate the information processing device 10 using the user interface.

The information processing device 10 may operate based on control of a terminal on a network or operate based on information stored in a server on the network. The information processing device 10 may be a system constituted by a plurality of devices connected to each other via the network. As a network used by the information processing device 10, either a wired network or a wireless network may be used or both a wired network and a wireless network may be used.

Furthermore, the information processing device 10 is configured to communicate with the ranging device 20 via a communication interface (not shown). That is, the information processing device 10 may control the ranging device 20 via the communication interface.

The ranging device 20 sets FOV based on an instruction for the FOV from the image processing device 15. The instruction for the FOV from the image processing device 15 to the ranging device 20 includes, for example, the FOV information. Furthermore, the ranging device 20 may change the number of the ranging points based on the speed received from the image processing device 15. The ranging device 20 two-dimensionally acquires the ranging information on a predetermined angle of view based on the instruction for the FOV from the image processing device 15 and the number of the ranging points, and transmits the acquired ranging information to the image processing device 15.

### <1-1-3> Configuration of Ranging Device 20

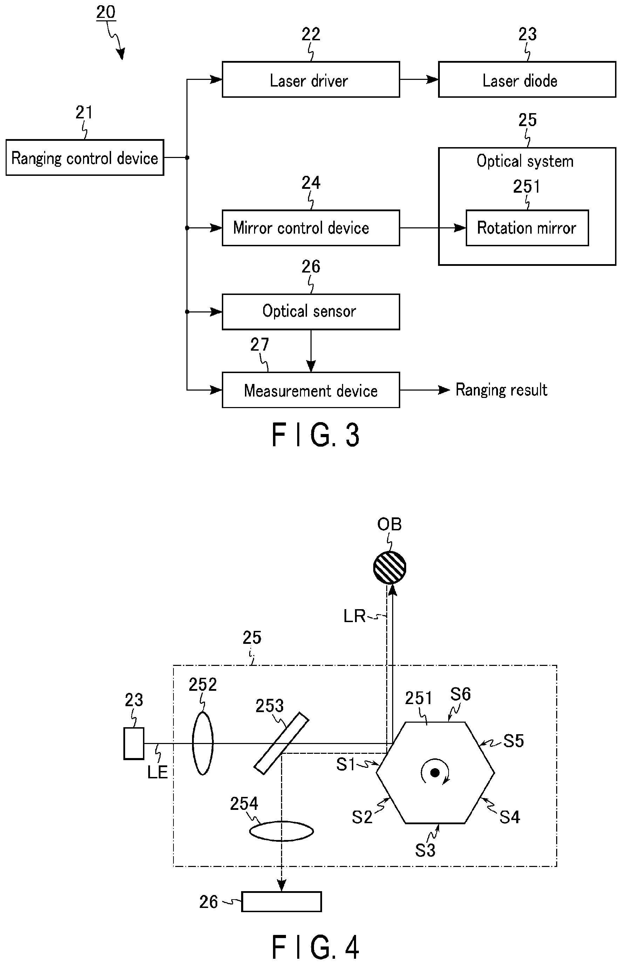

FIG. 3 is a block diagram showing an example of a configuration of the ranging device 20 according to the first arrangement. As shown in FIG. 3, the ranging device 20 includes, for example, a ranging control device 21, a laser driver 22, a laser diode 23, a mirror control device 24, an optical system 25, an optical sensor 26, and a measurement device 27. The optical system 25 includes, for example, a rotation mirror 251.

The ranging control device 21 controls the overall operation of the ranging device 20. The ranging control device 21 includes, for example, a CPU, a ROM, a RAM, and an oscillator (not shown). The ROM of the ranging control device 21 stores, e.g., a control program of the ranging device 20. The CPU of the ranging control device 21 controls the laser driver 22, the mirror control device 24, the optical sensor 26, and the measurement device 27, in accordance with the control program. The RAM of the ranging control device 21 is used as a work area of the CPU. The oscillator of the ranging control device 21 is used in generating intermittent pulse signals. The ranging control device 21 may be configured to execute various types of data processing or calculation processing.

The laser driver 22 drives the laser diode 23. That is, the laser driver 22 functions as a current supply source of the laser diode 23. The laser diode 23 emits laser light based on a drive current supplied by the laser driver 22. The laser light emitted by the laser diode 23 enters the optical system 25. The ranging control device 21 controls the laser driver 22 in such a manner that the laser diode 23 emits laser light intermittently. Hereinafter, laser light generated based on a pulse signal will also be referred to as a "pulse laser". In the ranging device 20, the pulse laser is emitted at a predetermined pulse width and a cycle.

The mirror control device 24 drives a rotation mirror 251 included in the optical system 25. That is, the mirror control device 24 functions as a power source circuit of a motor for rotating the rotation mirror 251. The rotation mirror 251 is driven (rotated) based on a drive current supplied by the mirror control device 24 and reflects laser light that has entered. The rotation mirror 251 is configured to be rotatable around one axis, for example. The rotation mirror 251 may be a double-sided mirror or a polygon mirror including three or more reflection surfaces (mirror surfaces). The optical system 25 further includes an optical element according to the arrangement of the laser diode 23 or the optical sensor 26. A detailed configuration of the optical system 25 will be described later. Meanwhile, the number of rotations of the rotation mirror 251 may be changed based on an instruction from the ranging control device 21. The rotation mirror 251 may be a biaxial Micro Electro Mechanical Systems (MEMS) mirror. As the rotation mirror 251, the rotation mirror may be used in combination with a uniaxial MEMS mirror assigned to scanning of a partial area. The rotation mirror 251 may be referred to as a "movable mirror".

The optical sensor 26 is a light receiving element that detects light that has entered the ranging device 20. The optical sensor 26 includes a plurality of pixels. The optical sensor 26 is arranged in such a manner that laser light that is emitted by the laser diode 23 and is reflected by an external object of the ranging device 20 enters via the optical system 25. The optical sensor 26 converts the laser light that has entered the ranging device 20 into an electrical signal. The conversion into an electrical signal is performed using, for example, an analog-to-digital converter (ADC) or a time-to-digital converter (TDC). The optical sensor 26 then adjusts an output level of the converted electrical signal and outputs it to the measurement device 27. A detailed configuration of the optical sensor 26 will be described later.

Based on a light reception result (electrical signal) transferred from the optical sensor 26, the measurement device 27 measures the time at which the optical sensor 26 detected laser light. For example, based on a light reception result and a number (hereinafter referred to as an "integration number AN") indicating the number of pixels whose light reception results are integrated to measure the time at which laser light was detected (hereinafter also referred to as a "detection time of laser light"), the measurement device 27 measures the time at which the laser light was detected. The integration number AN is set by, for example, the ranging control device 21. Assuming that the integration number AN in the case of measuring the detection time of laser light using a light reception result of one pixel is 1, in the case where the integration number AN is 1, the measurement device 27 determines that a peak portion of the light reception result of one pixel corresponds to the detection time of laser light, for example. Furthermore, assuming that the integration number AN in the case of measuring the detection time of laser light using light reception results of i pixels (where i is an integer equal to or greater than 2) is i, in the case where the integration number AN is i, the measurement device 27 integrates, for example, the light reception results of the i pixels and determines that a peak portion of an integrated signal corresponds to the detection time of laser light. The measurement device 27 then calculates ToF based on a difference between the time at which the laser diode 23 emitted laser light and the time at which the laser light reflected by a subject was detected. Thereafter, the measurement device 27 measures (ranges) a distance between the ranging device 20 and the subject based on the ToF and the speed of laser light. The measurement device 27 outputs a ranging result (ranging information) to the information processing device 10.

The measurement device 27 obtains the time at which the laser diode 23 emitted laser light, through, for example, a notification from the ranging control device 21. The time at which laser light was emitted may be measured by the optical sensor 26 detecting the laser light emitted from the laser diode 23.

The ranging control device 21 is capable of changing, based on an instruction for the FOV from the information processing device 10 (image processing device 15), setting of the FOV, a cycle and timing at which the laser diode 23 emits the pulse laser, or the rotation speed of the rotation mirror 251. Furthermore, the ranging control device 21 is capable of changing setting of the integration number AN used in the measurement device 27, based on the speed received from the information processing device 10 (image processing device 15). In this manner, the ranging control device 21 is capable of changing the FOV and the number of the ranging points of the ranging device 20. In other words, the ranging control device 21 is capable of changing the setting of the laser driver 22, the mirror control device 24, and the measurement device 27 in collaboration, based on the instruction for the FOV from the information processing device 10 and the speed received from the information processing device 10.

### (Configuration of Optical System 25)

FIG. 4 is a schematic diagram showing an example of a configuration of the optical system 25 included in the ranging device 20 according to the first arrangement. FIG. 4 shows the laser diode 23, the optical sensor 26, and an object OB, too. As shown in FIG. 4, the optical system 25 further includes, for example, optical elements 252, 253, and 254. Each of the optical elements 252 and 254 is, for example, a lens or mirror. Each of the optical elements 252 and 254 may be comprised of a combination of a plurality of lenses and a plurality of mirrors. The optical element 253 is, for example, a half mirror or a bored mirror. Hereinafter, a pulse laser emitted by the laser diode 23 will also be referred to as "emission light LE". A pulse laser (emission light LE) reflected by the object OB will also be referred to as "reflection light LR".

The optical element 252 guides the emission light LE emitted from the laser diode 23 to the optical element 253. The emission light LE guided by the optical element 252 permeates or passes through the optical element 253, thereby being irradiated on the rotation mirror 251. The rotation mirror 251 reflects the emission light LE irradiated thereon, in the direction in accordance with an incident angle of the emission light LE with respect to an irradiation surface. The reflected emission light LE is reflected by the object OB positioned in a traveling direction of the emission light LE outside the ranging device 20.

The reflection light LR from the object OB is reflected by the rotation mirror 251, thereby being irradiated on the optical element 253. The optical element 253 reflects reflection light LR reflected by the rotation mirror 251 toward the optical element 254. The optical element 254 guides the reflection light LR reflected by the optical element 253 to the optical sensor 26. The optical sensor 26 converts the reflection light LR guided by the optical element 254 into an electrical signal and outputs it to the measurement device 27.

This description describes an exemplary case in which the rotation mirror 251 is a polygon mirror including six refection surfaces S1 to S6. The reflection surfaces S1 to S6 differ from each other in terms of tilt angle. The ranging control device 21 controls the rotation mirror 251 in such a manner that the rotation mirror 251 rotates at a fixed rotation speed based on a fixed angle of view and ranging rate. The ranging device 20 can two-dimensionally scan a place desired to be ranged, by using the emission light LE intermittently emitted and the rotation mirror 251.

Hereinafter, an area that is scannable by the ranging device 20 will be referred to as a "scan area SA". A set of ranging results at a plurality of points corresponding to one scanning will be referred to as a "frame". An image of one frame is generated in response to, for example, one rotation of the rotation mirror 251. The ranging device 20 can consecutively obtain distance information on a distance to the object OB in front of the ranging device 20 by continuously executing scanning. The optical system 25 may have another configuration as long as it is configured to perform scanning using laser light.

### (Configuration of Scan Area SA)

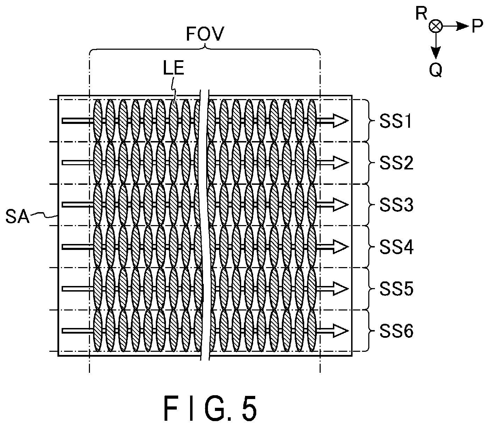

FIG. 5 is a schematic diagram showing an example of a configuration of the scan area SA that is scannable by the ranging device 20 according to the first arrangement. FIG. 5 shows an example of an emission direction of the emission light LE for one frame in the scan area SA. As shown in FIG. 5, the emission light LE is irradiated to a PQR space. An R axis is an axis heading from the ranging device 20 to a subject and extending, for example, along the center in the emission direction of the emission light LE. A PQ surface is a curved surface perpendicular to the R axis and concentrically extending from an emission opening of the emission light LE. A P axis and a Q axis are axes perpendicular to each other in the PQ surface. Distance data measured based on each emission light LE is generated, for example, as a mapping to the PQ surface. The ranging system 1 is capable of recognizing a distance to an object existing in an FOV by mapping distance data on a distance up to an object existing in the PQR space to the FOV in the scan area SA.

FIG. 5 shows an FOV set based on instructions by the image processing device 15. The ranging control device 21 controls the laser driver 22, the mirror control device 24, etc., in such a manner that the emission light LE is intermittently emitted at a timing based on the set FOV. In this manner, the ranging device 20 realizes scanning in a P direction (horizontal direction). In the case of using the rotation mirror 251 having six reflection surfaces S1 to S6 such as those shown in FIG. 4, the scan area SA includes a first row SS1 to a sixth row SS6. Scanning positions of the first row SS1 to the sixth row SS6 are respectively based on the tilt angles of the reflection surfaces S1 to S6. That is, the ranging device 20 realizes scanning of the plurality of rows shifted in a Q direction (vertical direction) by irradiating different reflection surfaces with the emission light LE by rotating the rotation mirror 251.

For example, the emission light LE emitted to a position (a direction) of a j row SSj (where j is an integer equal to or greater than 1 and equal to or smaller than 6) in the scan area SA is reflected by a reflection surface Sj of the rotation mirror 251, and is thereafter irradiated on the object OB, thereby being reflected by the object OB. The reflection light LR (hereinafter also referred to as a "reflection light LR corresponding to the emission light LE") reflected by the object OB is reflected by the reflection surface Sj and then received by the optical sensor 26. In this manner, the ranging device 20 can acquire ranging information in the set FOV.

Meanwhile, the ranging device 20 can generate a plurality of pixels one-dimensionally arranged (distance data) based on one beam of emission light LE. A plurality of pixels one-dimensionally arranged are arranged along a Q axis, for example. The ranging device 20 repeatedly executes processing at a measurement cycle related to the measurement associated with one beam of the emission light LE while making a one-dimensional shift along the P axis at each of the first row SS1 to the sixth row SS6. In this manner, the ranging device 20 can generate the distance data in the set FOV. Such a scanning method is also called "multi-channel raster scanning". As means for realizing the multi-channel raster scanning, the emission light LE having an irradiation surface in a vertically elongated shape is used. Meanwhile, the set number of rows and scanning direction in one scanning of the ranging device 20 may be other than those described above.

### (Configuration of Optical Sensor 26)

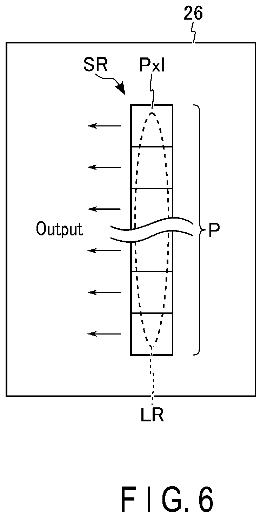

FIG. 6 is a diagram showing a configuration of the optical sensor 26 included in the ranging device 20 according to the first arrangement with respect to the scan area SA shown in FIG. 5. As shown in FIG. 6, the optical sensor 26 is comprised of a sensor SR in which a plurality of, for example, p pixels (where P is an integer equal to or greater than 2) Pxl are one-dimensionally arranged in the vertical direction. Furthermore, the optical sensor 26 has a function of converting the amount of reflection light LR that enters to the P pixels Pxl arranged in parallel by using the P pixels Pxl into currents or voltages and outputting them. One pixel Pxl includes, for example, at least one photomultiplier element as an element that converts light into an electrical signal. As the photomultiplier element, for example, a single-photon avalanche diode (SPAD), which is a type of avalanche photodiode, is used.

The reflection light LR corresponding to the emission light LE irradiated on a different reflection surface through the rotation of the rotation mirror 251 is received by the sensor SR. In FIG. 6, the reflection light LR received by the sensor SR is indicated by a dashed line.

FIG. 6 shows the case in which the optical sensor 26 is a one-dimensional sensor; however, the optical sensor 26 may be a two-dimensional sensor. For example, the optical sensor 26 may be a two-dimensional sensor having a configuration in which a plurality of sensors SR shown in FIG. 6 are arranged in the vertical and horizontal directions. In such a case, the optical sensor 26 receives the reflection light LR without intervention of the rotation mirror 251, in which the reflection light LR that corresponds to the emission light LE that is emitted by the laser diode 23, is irradiated on a subject, and is then reflected by the subject.

### (Relationship between Integration Number and Number of Ranging Points)

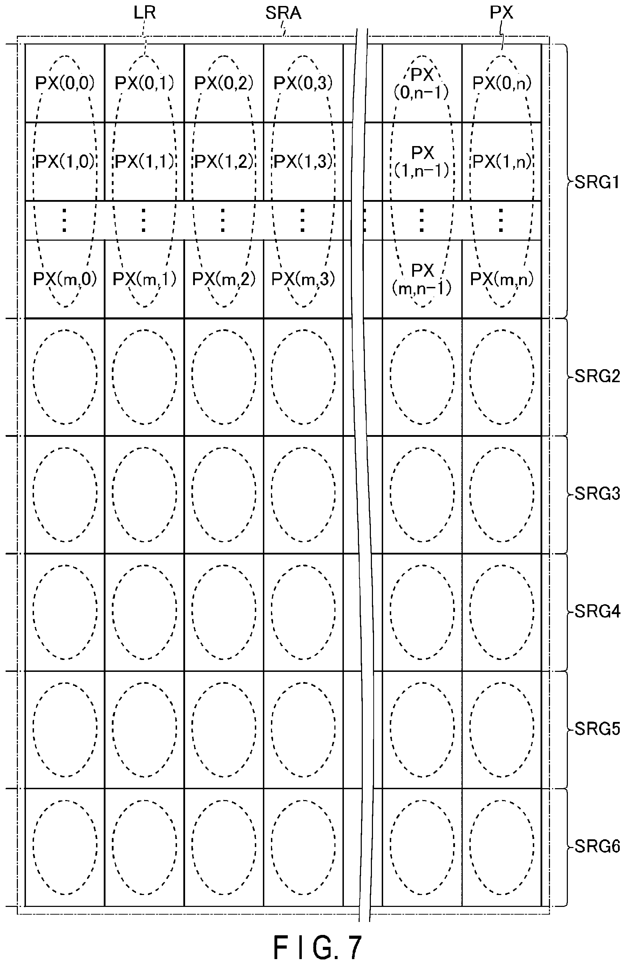

FIG. 7 is a schematic diagram showing an example of a two-dimensional pixel area that is obtained through scanning by the ranging device 20 according to the first arrangement. Hereinafter, the two-dimensional pixel area obtained through scanning by the ranging device 20 will be referred to as a "scanning result area SRA".

In the case of using the rotation mirror 251 having six reflection surfaces S1 to S6 such as those shown in FIG. 4, the scanning result area SRA includes six scanning result groups SRG1 to SRG6. The scanning result groups SRG1 to SRG6 respectively correspond to the first row SS1 to sixth row SS6 of the scan area SA shown in FIG. 5. The scanning result group SRG1 includes a plurality of pixels PX. Hereinafter, the pixels PX in the scanning result group SRG1 will be respectively referred to as PX (0,0) to PX (m,n) (where m and n are integers equal to or greater than 1). That is, the scanning result group SRG1 includes (m + 1 ) × ( n + 1) pixels PX. Although illustration is omitted, each of the scanning result groups SRG2 to SRG6 also includes (m + 1) × (n + 1) pixels PX in a similar manner. Hereinafter, the pixel PX will also be referred to as a scanning position PX.

In FIG. 7, the reflection light LR is indicated by a dashed line in order to facilitate understanding of a correspondence relationship between the reflection light LR received by the sensor SR and the scanning position PX in the scanning result group SRG1.

Herein, the reflection light LR (pulse signal) received by the optical sensor 26 will be described.

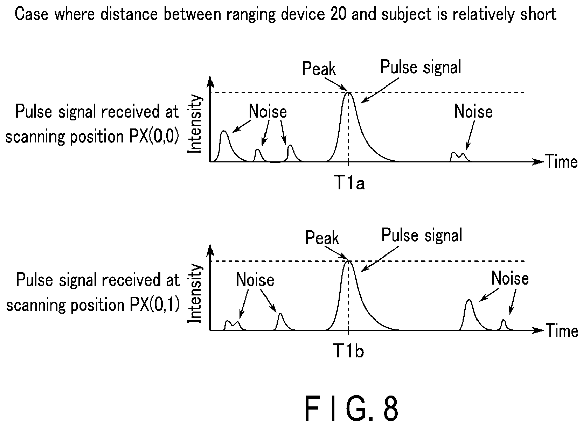

FIG. 8 is a diagram illustrating an example of waveforms of pulse signals received by the optical sensor 26 in the case where the distance between the ranging device 20 and a subject is relatively short. FIG. 8 shows the waveforms of pulse signals and noise received by the sensor SR at each of the scanning position PX (0,0) and the scanning position PX (0,1) in the scanning result group SRG1 of FIG. 7. The vertical axis represents a signal intensity. The horizontal axis represents time.

In the case where the distance between the ranging device 20 and the subject is relatively short, the attenuation of the pulse signal is relatively small. For this reason, as shown in FIG. 8, the peak value of the intensity of the pulse signal takes a value sufficiently larger than the noise. For example, the intensity of the pulse signal received at the scanning position PX (0,0) takes a peak value at time T1a. The intensity of the pulse signal received at the scanning position PX (0,1) takes a peak value at time T1b. Since the scanning position PX (0,0) and the scanning position PX (0,1) are adjacent to each other in the horizontal direction, the times T1a and T1b are relatively close to each other. This enables the measurement device 27 to determine that the time T1a is the detection time of the reflection light LR at the scanning position PX (0, 0). Similarly, this enables the measurement device 27 to determine that the time T1b is the detection time of the reflection light LR at the scanning position PX (0,1). As described above, in the case where the distance between the ranging device 20 and the subject is relatively short, the measurement device 27 can measure the detection time of reflection light LR using the light reception result of one scanning position PX. That is, in the case where the distance between the ranging device 20 and the subject is relatively short, the ranging control device 21 can set the integration number AN to 1, for example.

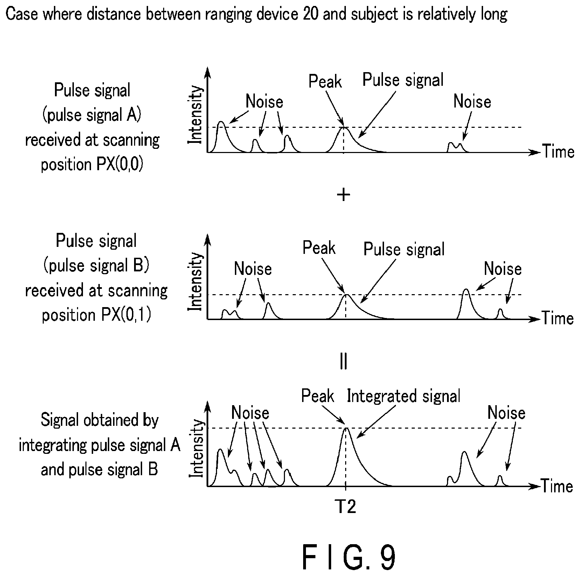

FIG. 9 is a diagram illustrating an example of waveforms of pulse signals received by the optical sensor 26 in the case where the distance between the ranging device 20 and the subject is relatively long. FIG. 9 shows the waveforms of the pulse signals (hereinafter these pulse signals will be referred to as a "pulse signal A" and a "pulse signal B", respectively) and noise received by the sensor SR at each of the scanning position PX (0,0) and the scanning position PX (0,1) in the scanning result group SRG1 of FIG. 7. Furthermore, FIG. 9 shows the waveforms of signals each obtained by integrating the pulse signal A and the pulse signal B, and integrated noise. The vertical axis represents a signal intensity. The horizontal axis represents time.

In the case where the distance between the ranging device 20 and the subject is relatively long, the attenuation of the pulse signal is relatively large. For this reason, as shown in FIG. 9, the peak value of the intensity of the pulse signal may take a value smaller than the noise. For example, the peak value of the pulse signal A received at the scanning position PX (0,0) is smaller than the noise. The peak value of the pulse signal B received at the scanning position PX (0,1) is smaller than the noise. Therefore, it is difficult for the measurement device 27 to determine the detection time of the reflection light LR from the peak value of the intensity of the signal at the scanning position PX (0,0). Similarly, it is difficult for the measurement device 27 to determine the detection time of the reflection light LR from the peak value of the intensity of the signal at the scanning position PX (0,1).

On the other hand, as shown in FIG. 9, the peak value of the intensity of the signal obtained by integrating the pulse signal A and the pulse signal B takes a value sufficiently greater than the integrated noise. For example, the intensity of the signal obtained by integrating the pulse signal A and the pulse signal B takes a peak value at the time T2. Therefore, the measurement device 27 can determine that the time T2 is the detection time of the reflection light LR at the scanning position PX (0,0) and the scanning position PX (0,1). As described above, the measurement device 27 can measure the detection time of the reflection light LR by integrating the light reception results at the two scanning positions PX. That is, in the case where the distance between the ranging device 20 and the subject is relatively long, the ranging control device 21 can set the integration number AN to 2, for example.

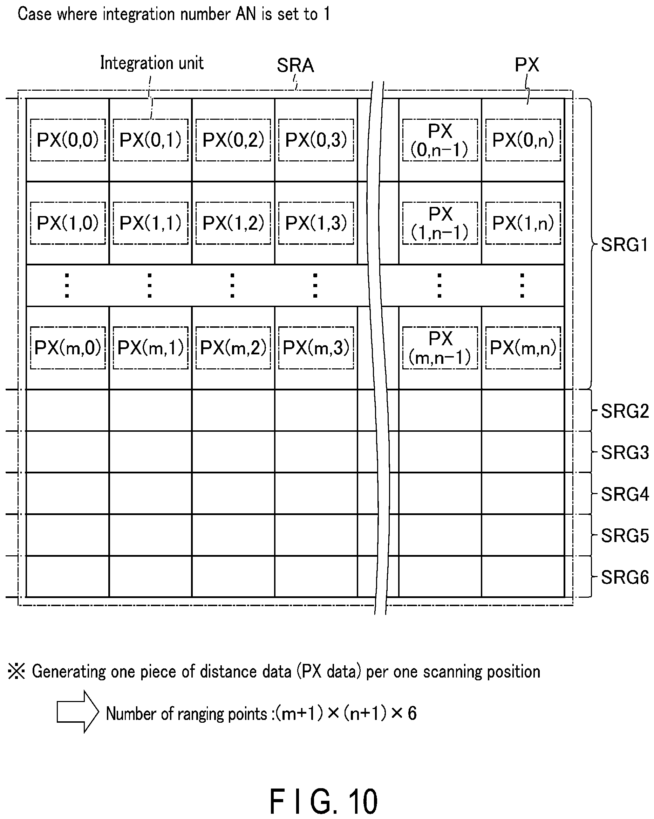

FIG. 10 is a diagram illustrating the number of ranging points obtained by the measurement device 27 in the case where the integration number AN is set to 1. As shown in FIG. 10, in the case where the integration number AN is set to 1, an integration unit in the scanning result group SRG1 in the scanning result area SRA is one pixel. The same integration unit applies to the scanning result groups SRG2 to SRG6 in the scanning result area SRA. In such a case, one piece of the distance data (pixel PX data) is generated per one scanning position by the measurement device 27. In this manner, the number of the ranging points obtained by the measurement device 27 is represented by (m + 1) × (n + 1) × 6. The measurement device 27 transmits the generated ((m + 1) × (n + 1) × 6) pieces of the distance data as ranging information to the information processing device 10.

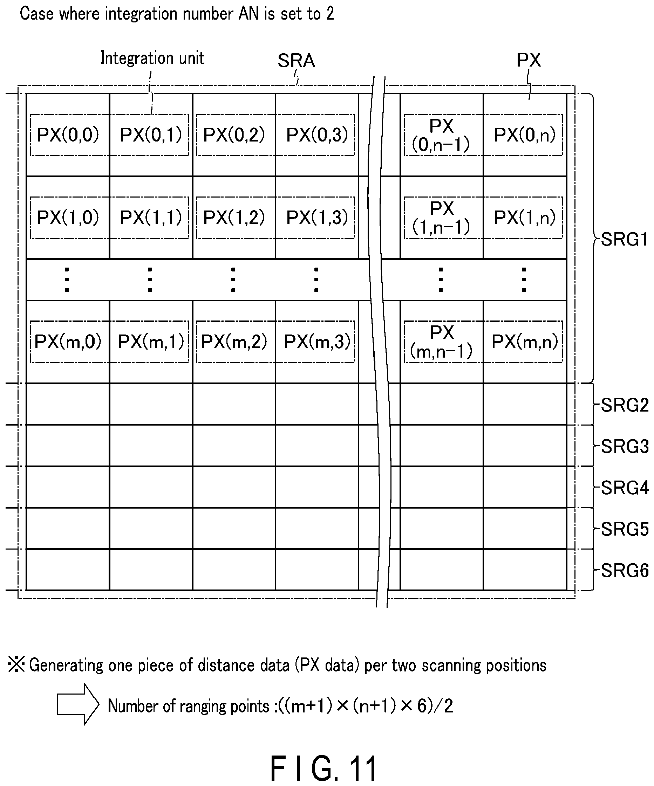

FIG. 11 is a diagram illustrating the number of the ranging points obtained by the measurement device 27 in the case where the integration number AN is set to 2. As shown in FIG. 11, in the case where the integration number AN is set to 2, an integration unit in the scanning result group SRG1 in the scanning result area SRA is two pixels. That is, the integration unit corresponds to two scanning positions PX arranged in the horizontal direction. The same integration unit applies to the scanning result groups SRG2 to SRG6 in the scanning result area SRA. In such a case, one piece of the distance data (pixel PX data) is generated per two scanning positions by the measurement device 27. In this manner, the number of the ranging points obtained by the measurement device 27 is represented by ((m + 1) × (n + 1) × 6) / 2. The measurement device 27 transmits the generated (((m + 1) × (n + 1) × 6) / 2) pieces of the distance data as ranging information to the information processing device 10.

Thus, in the case where the integration number AN is set to 2, the number of the ranging points become half of the number of the ranging points in the case where the integration number AN is set to 1. However, by integrating the light reception results of two scanning positions PX, the amount of the reflection light LR becomes twice as high as the amount of reflection light LR in the case where the integration number AN is set to 1. Thus, in the case where the integration number AN is set to 2, the ranging performance is improved as compared to the case in which the integration number AN is set to 1.

In the example of FIG. 11, the light reception results at two scanning positions PX arranged in the horizontal direction are integrated; however, the light reception results at two scanning positions PX arranged in the vertical direction may be integrated. In such a case, in the scanning result group SRG1 within the scanning result area SRA, for example, a pulse signal received at the scanning position PX(0,0) and a pulse signal received at the scanning position PX(1,0) can be integrated. A pulse signal received at the scanning position PX (0,1) and a pulse signal received at the scanning position PX (1,1) can be integrated. The same applies to the subsequent integrations. Furthermore, the same applies to the scanning result groups SRG2 to SRG6 in the scanning result area SRA.

Furthermore, in the case where the integration number AN is set to 2, the light reception results may be integrated in such a manner that ranging for one frame is performed twice in a row, the light reception results in the scanning result area SRA are acquired for the first ranging and the second ranging, and the light reception results at the corresponding scanning position PX are integrated.

By the measurement device 27 performing integrations spatially or temporally in this manner, the ranging performance can be improved while reducing the number of the ranging points. The integration number AN may be set to 3 or greater.

### <1-1-4> Functional Configuration of Ranging System 1

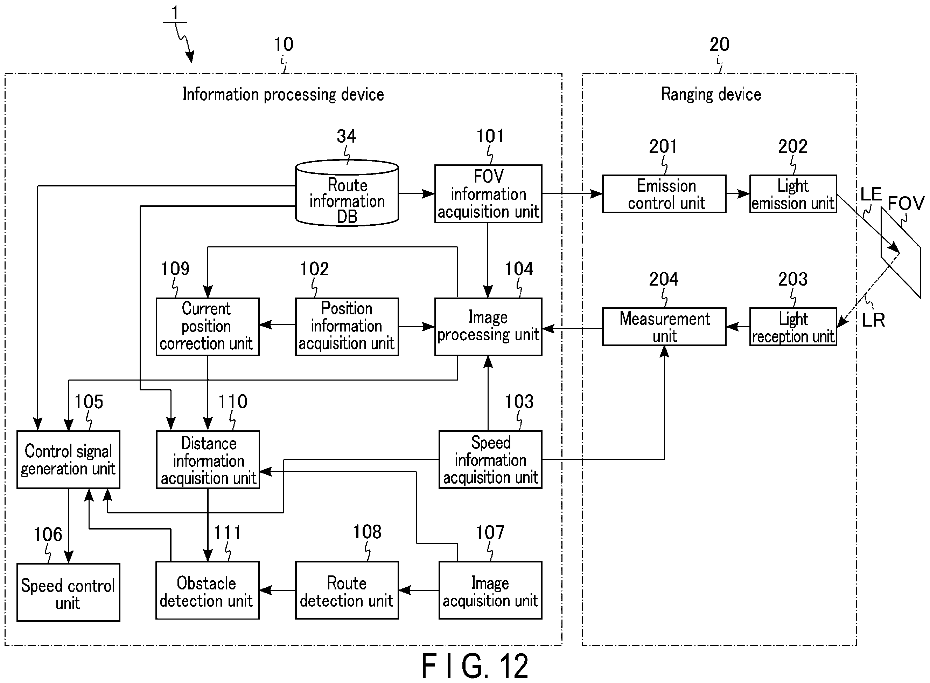

FIG. 12 is a block diagram showing an example of a functional configuration of the ranging system 1 according to the first arrangement. As shown in FIG. 12, in the ranging system 1, the information processing device 10 functions as an FOV information acquisition unit 101, a position information acquisition unit 102, a speed information acquisition unit 103, an image processing unit 104, a control signal generation unit 105, a speed control unit 106, an image acquisition unit 107, a route detection unit 108, a current position correction unit 109, a distance information acquisition unit 110, an obstacle detection unit 111, and the route information database 34. The ranging device 20 functions as an emission control unit 201, a light emission unit 202, a light reception unit 203, and a measurement unit 204.

The FOV information acquisition unit 101 is a functional block corresponding to the image processing device 15. The position information acquisition unit 102 is a functional block corresponding to the speed sensor 31, the GNSS device 32, and the image processing device 15. The speed information acquisition unit 103 is a functional block corresponding to the speed sensor 31, the transport equipment control device 13, and the image processing device 15. The image processing unit 104 is a functional block corresponding to the image processing device 15. The control signal generation unit 105 is a functional block corresponding to the transport equipment control device 13. The speed control unit 106 is a functional block corresponding to the speed control device 14. The image acquisition unit 107 is a functional block corresponding to the camera 33. The route detection unit 108, the current position correction unit 109, the distance information acquisition unit 110, and the obstacle detection unit 111 are functional blocks corresponding to the image processing device 15.

The emission control unit 201 is a functional block corresponding to, for example, the ranging control device 21 and the laser driver 22. The light emission unit 202 is a functional block corresponding to the laser diode 23 and the optical system 25. The light reception unit 203 is a functional block corresponding to the optical system 25 and the optical sensor 26. The measurement unit 204 is a functional block corresponding to the ranging control device 21 and the measurement device 27.

The FOV information acquisition unit 101 acquires FOV information stored in the route information database 34. The FOV information acquisition unit 101 transmits the acquired FOV information to each of the image processing unit 104 and the emission control unit 201.

The position information acquisition unit 102 acquires the current position of the transport equipment VE based on the measurement result of the GNSS device 32. To acquire a current position, the position information acquisition unit 102 uses a position measurement calculation processing algorithm including, for example, satellite positioning signal processing, autonomous measurement data calculation processing, and time calculation processing. The position information acquisition unit 102 transmits the acquired current position to each of the image processing unit 104 and the current position correction unit 109.

The speed information acquisition unit 103 acquires the current speed of the transport equipment VE. The speed information acquisition unit 103 transmits the acquired speed to each of the image processing unit 104, the measurement unit 204, and the control signal generation unit 105. The speed acquired by the speed information acquisition unit 103 may be a relative speed between the transport equipment VE and the external subject.

The measurement unit 204 sets the integration number AN based on the speed received from the speed information acquisition unit 103. In this manner, the number of the ranging points is set to a value based on the integration number AN. The emission control unit 201 sets the FOV based on the FOV information received from the FOV information acquisition unit 101 and supplies pulse signals to the light emission unit 202. The light emission unit 202 emits a pulse laser (emission light LE) in accordance with the pulse signal received from the emission control unit 201. Furthermore, the light emission unit 202 scans the FOV based on the control of the rotation of the rotation mirror 251 and the control of the emission timing of the emission light LE by the emission control unit 201. The light reception unit 203 receives the reflection light LR reflected from the object OB within the FOV and converts it into an electrical signal. The light reception unit 203 then transmits the converted electrical signal (light reception result) to the measurement unit 204. The measurement unit 204 generates distance data corresponding to the number of the ranging points based on the electrical signal (light reception result) received from the light reception unit 203, and the integration number AN. That is, the measurement unit 204 generates the distance data corresponding to the FOV based on the integration number AN. The measurement unit 204 transmits the generated distance data as ranging information to the image processing unit 104.

The image processing unit 104 generates an image in frame units based on the ranging information received from the measurement unit 204 and the FOV information received from the FOV information acquisition unit 101. The image generated by the image processing unit 104 includes distance information on a distance between the ranging device 20 and the object OB within the FOV. The image processing unit 104 transmits the generated image to each of the control signal generation unit 105 and the current position correction unit 109.

The control signal generation unit 105 generates a control signal concerning the acceleration/deceleration of the transport equipment VE based on, for example, the speed obtained from the speed information acquisition unit 103, an instruction from the image processing unit 104, information obtained from the image processing unit 104, the operation information obtained from the route information database 34, etc. Then, the control signal generation unit 105 transmits the generated control signal to the speed control unit 106.

The speed control unit 106 controls the stopping or the acceleration/deceleration of the transport equipment VE based on the control signal received from the control signal generation unit 105.

The image acquisition unit 107 acquires an image of the vicinity of the transport equipment VE. The image acquisition unit 107 transmits the acquired image to the route detection unit 108.

The route detection unit 108 detects the route RT from the image received from the image acquisition unit 107. That is, the route detection unit 108 detects the route RT in front of the transport equipment VE and determines an area in which the transport equipment VE travels on the route RT. The route detection unit 108 then transmits the acquired information on the route RT to the obstacle detection unit 111.

The current position correction unit 109 corrects a current position of the transport equipment VE obtained from the position information acquisition unit 102 using the ranging information obtained from the image processing unit 104. The current position correction unit 109 transmits the corrected current position of the transport equipment VE to the distance information acquisition unit 110.

The distance information acquisition unit 110 determines a distance from a start point of the transport equipment VE (a relative distance between the transport equipment VE and the subject) based on the corrected current position of the transport equipment VE obtained from the current position correction unit 109, information obtained from the route information database 34, and an image obtained from the image acquisition unit 107. The subject is, for example, an obstacle. The distance information acquisition unit 110 transmits the distance from the start point of the transport equipment VE to the obstacle detection unit 111.

The obstacle detection unit 111 detects an obstacle based on information on the route RT obtained from the route detection unit 108 and the distance from the start point of the transport equipment VE obtained from the distance information acquisition unit 110. As a result of detection of the obstacle, in the case where the transport equipment VE needs to be stopped, the obstacle detection unit 111 instructs the control signal generation unit 105 to stop the transport equipment VE.

The control signal generation unit 105 generates a control signal concerning the stopping of the transport equipment VE based on the instruction for stopping the transport equipment VE issued by the obstacle detection unit 111. The control signal generation unit 105 then transmits the generated control signal to the speed control unit 106.

### <1-2> Operation

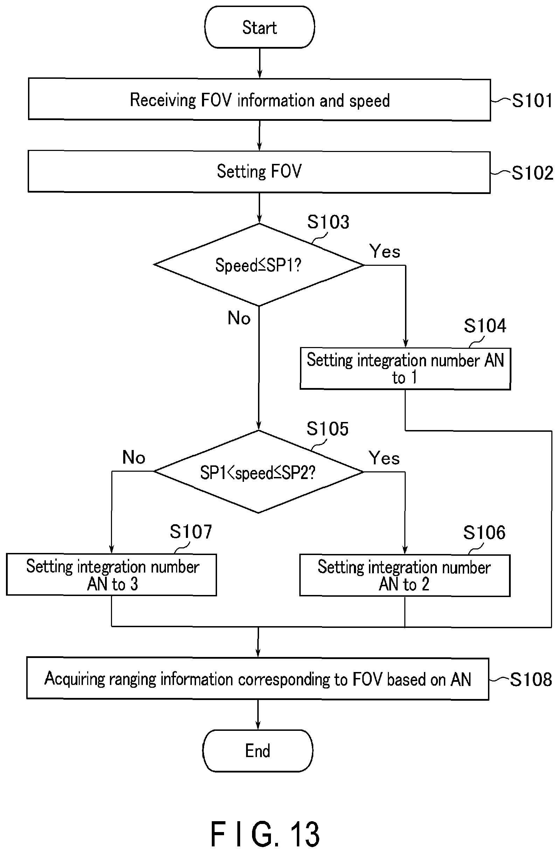

FIG. 13 is a flowchart showing an example of ranging operation of the ranging device 20 according to the first arrangement. Hereinafter, the ranging operation of the ranging device 20 according to the first arrangement will be described with reference to FIG. 13.

For example, in the case where the transport equipment VE starts to operate, the ranging operation starts, and the ranging control device 21 receives the FOV information and the speed from the information processing device 10 (S101).

Next, the ranging control device 21 sets the FOV based on the FOV information (S102).

The ranging control device 21 then controls the number of the ranging points based on the received speed (relative speed). Specifically, the ranging control device 21 determines whether or not the speed is equal to or smaller than the first speed threshold SP1 (S103). The first speed threshold SP1 is, for example, 30 km/h.

In the case where the speed is equal to or smaller than the first speed threshold SP1 (S103: YES), the ranging control device 21 sets the integration number AN to 1 (S104).

In the case where the speed is greater than the first speed threshold SP1 (S103: NO), the ranging control device 21 determines whether or not the speed is greater than the first speed threshold SP1 and equal to or smaller than the second speed threshold SP2 (S105). The second speed threshold SP2 is, for example, 60 km/h.

In the case where the speed is greater than the first speed threshold SP1 and equal to or smaller than the second speed threshold SP2 (S105: YES), the ranging control device 21 sets the integration number AN to 2 (S106).

In the case where the speed is greater than the second speed threshold SP2 (S105: NO), the ranging control device 21 sets the integration number AN to 3 (S107).

Through the execution of steps S103 to S107, the number of the ranging points is changed based on the speed of the transport equipment VE.

In the case where the integration number AN is set to 1, the number of the ranging points is set to P1. In the case where the integration number AN is set to 2, the number of the ranging points is set to P2. In the case where the integration number AN is set to 3, the number of the ranging points is set to P3. With the setting described above, the relationship among P1, P2, and P3 is expressed by P1 > P2 > P3.

Next, in the case where the laser light emitted from the laser diode 23 based on the FOV is received by the optical sensor 26 and the light reception result is transferred, the measurement device 27 acquires the ranging information corresponding to the FOV based on the integration number AN (S108).

### <1-3> Advantageous Effects of First Arrangement

With the ranging system 1 according to the first arrangement described above, the ranging distance performance can be improved. Details of advantageous effects of the first arrangement will be described hereinafter.

The ranging distance performance required for the LiDAR mounted on the transportation equipment VE that travels on a given route varies depending on the situation in which the LiDAR is linked with a camera to detect obstacles in front, the situation in which the LiDAR is caused to measure a distance by identifying signs placed in the vicinity of the route in advance, or the situation in which the LiDAR is caused to detect weather such as rain, fog, snow, etc. For example, in the case where the transport equipment VE travels at high speed, an accuracy in which an obstacle is able to be detected within a longer distance is required. Thus, in such a case, the ranging distance performance required for the LiDAR is a ranging performance for a longer distance. In order to achieve this, it is required for the number of the ranging points in the ranging information obtained by the LiDAR to be reduced at the expense of the resolution of an image generated based on the aforementioned ranging information as the speed increases.

In the ranging system 1 according to the first arrangement, the information processing device 10 controls the number of the ranging points of the ranging device 20 (LiDAR) based on information collected by a sensor, etc. Specifically, the information processing device 10 acquires the speed of the transportation equipment VE by using the speed sensor 31. The information processing device 10 then transmits the acquired speed to the ranging device 20. Based on the speed received from the information processing device 10, the ranging device 20 changes the setting of the integration number AN for use by the measurement device 27. For example, the ranging device 20 sets a larger value to the integration number AN as the speed increases. This enables the ranging device 20 to reduce the number of the ranging points as the speed increases. Thus, the ranging device 20 according to the first arrangement can realize the ranging distance performance suited to the case in which the transport equipment VE is traveling at high speed. That is, the ranging device 20 according to the first arrangement can improve the ranging distance performance. Therefore, the transport equipment VE using the ranging system 1 according to the first arrangement can improve the detection accuracy of an obstacle existing at a longer distance.

### <1-4> First Modification

A ranging system 1A according to a first modification of the first arrangement changes the number of the ranging points for a part of the angle of view. Hereinafter, with respect to the ranging system 1A according to the first modification of the first arrangement, the following description will concentrate on the features different from the first arrangement.

### <1-4-1> Setting of Integration Number

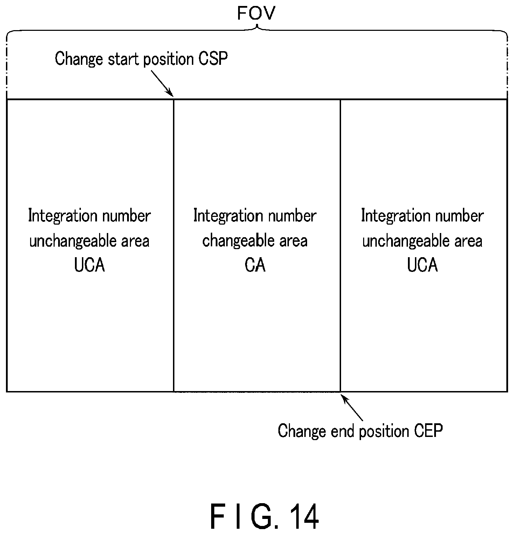

FIG. 14 is a diagram showing an example of setting of the integration number in the FOV in the case of changing the number of the ranging points for a part of the FOV. In FIG. 14, the FOV is divided into three areas, a left area, a middle area and a right area. The left area and the right area are areas in which the number of the ranging points is not changed, that is, areas in which the integration number is not changed (hereinafter referred to as an "integration number unchangeable area UCA"). The middle area is an area in which the number of the ranging points can be changed, that is, an area in which the integration number can be changed (hereinafter referred to as an "integration number changeable area CA").

The integration number of the integration number unchangeable area UCA is set to 1, for example. Hereinafter, the integration number set to the integration number unchangeable area UCA will be referred to as an "initial integration number AN0". The initial integration number AN0 is included in the FOV information, for example. The integration number changeable area CA is defined by a change start position CSP and a change end position CEP. In FIG. 14, the change start position CSP is set at the upper left of the middle area. The change end position CEP is set at the lower right of the middle area. The change start position CSP and the change end position CEP are included in the FOV information, for example. The integration number of the integration number changeable area CA is set based on the speed obtained from the information processing device 10, for example. Two or more integration number changeable areas CA may be provided in the FOV.

### <1-4-2> Functional Configuration of Ranging System 1A

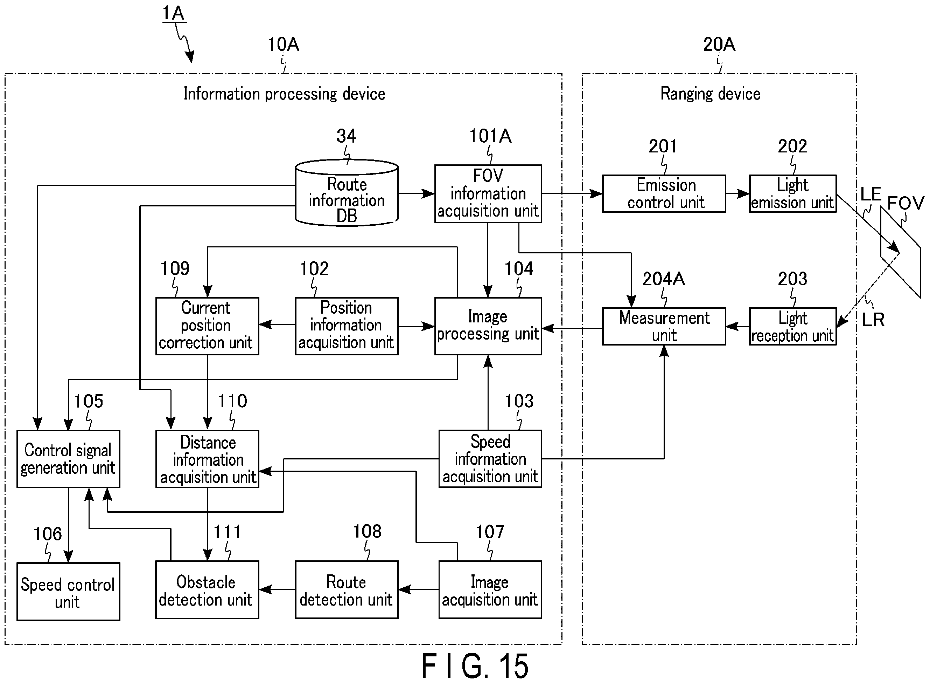

FIG. 15 is a block diagram showing an example of a functional configuration of the ranging system 1A according to the first modification of the first arrangement.

An FOV information acquisition unit 101A transmits FOV information to a measurement unit 204A in addition to the operation of the FOV information acquisition unit 101 described in the first arrangement.

The measurement unit 204A sets the initial integration number AN0 based on the FOV information received from the FOV information acquisition unit 101A. The measurement unit 204A also sets the change start position CSP and the change end position CEP based on the FOV information. The measurement unit 204A sets the integration number AN based on the speed received from the speed information acquisition unit 103.

The measurement unit 204A generates distance data corresponding to the number of the ranging points based on the electrical signal (light reception result) received from the light reception unit 203, the initial integration number AN0, the change start position CSP, the change end position CEP, and the integration number AN. That is, the distance data corresponding to the integration number unchangeable area UCA in the FOV is acquired based on the initial integration number AN0. The distance data corresponding to the integration number changeable area CA in the FOV is acquired based on the integration number AN. As a result, the ranging information corresponding to the FOV is acquired.

The other configurations and operations of the ranging system 1A according to the first modification of the first arrangement are the same as those of the ranging system 1 according to the first arrangement.

### <1-4-3> Operation

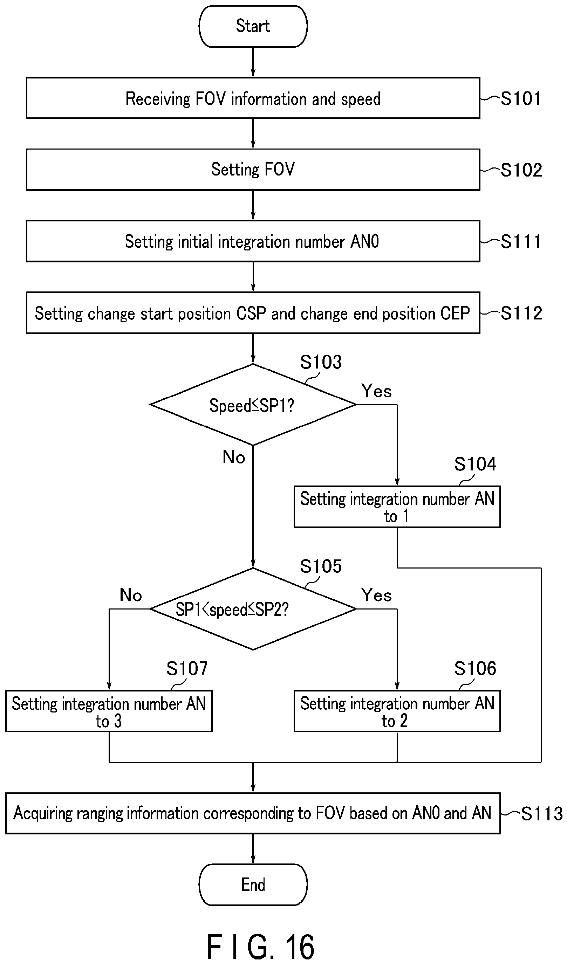

FIG. 16 is a flowchart showing an example of the ranging operation of the ranging device 20 according to the first modification of the first arrangement. FIG. 16 includes additional steps S111 and S112 after step S102 of FIG. 13 described in the first arrangement, and includes step S113 in place of step S108 of FIG. 13. Hereinafter, the ranging operation of the ranging device 20 according to the first modification of the first arrangement will be described with reference to FIG. 16.

In step S102, in the case where the FOV is set, the ranging control device 21 sets the initial integration number AN0 based on the FOV information (S111).

The ranging control device 21 then sets the change start position CSP and the change end position CEP based on the FOV information (S112).

Next, after the execution of steps S103 to S107, in the case where the laser light emitted from the laser diode 23 based on the FOV is received by the optical sensor 26 and the light reception result is transferred, the measurement device 27 acquires the ranging information corresponding to the FOV based on the initial integration number AN0 and the integration number AN (S113).

### <1-4-4> Advantageous Effects of First Modification

The present modification produces advantageous effects similar to those of the first arrangement.

Further, in this modification, an information processing device 10A sets an area in which the number of the ranging points within the angle of view can be changed. Specifically, the information processing device 10A sets the integration number changeable area CA, the change start position CSP, and the change end position CEP for the angle of view. The information processing device 10A then controls the number of the ranging points of the ranging device 20A (LiDAR) based on the integration number changeable area CA, the change start position CSP, and the change end position CEP each set for the angle of view, and the information collected by a sensor, etc. This enables the ranging device 20A to reduce the number of the ranging points and increase the resolution of an image generated based on the ranging information, for a specific area (for example, the area of the route RT within the angle of view). Therefore, the transportation equipment VE using the ranging system 1A according to the first modification of the first arrangement can improve the detection accuracy of an obstacle in a specific area such as an area on the route RT.

### <1-5> Second Modification

A ranging system 1B according to a second modification of the first arrangement changes the number of the ranging points for a part of the angle of view. The ranging system 1B differs from the first modification of the first arrangement in terms of setting of the integration number in the FOV. Hereinafter, with respect to the ranging system 1B according to the second modification of the first arrangement, the following description will concentrate on the features different from the first modification of the first arrangement.

### <1-5-1> Setting of Integration Number

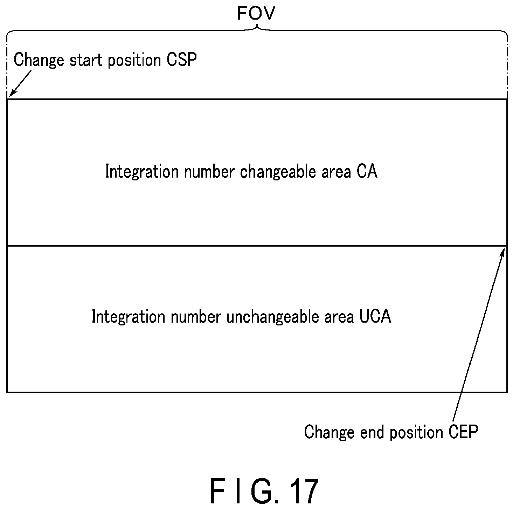

FIG. 17 is a diagram showing an example of setting of the integration number in the FOV in the case of changing the number of the ranging points for a part of the FOV. In FIG. 17, the FOV is divided into two areas, an upper area and a lower area. The upper area is an area in which the number of the ranging points can be changed, that is, the integration number changeable area CA. The lower area is an area in which the number of the ranging points is not changed, that is, the integration number unchangeable area UCA. The integration number of the integration number unchangeable area UCA and the integration number of the integration number changeable area CA are set as with the first modification of the first arrangement. In FIG. 17, the change start position CSP is set at the upper left of the upper area. The change end position CEP is set at the lower right of the upper area. Two or more integration number changeable areas CA may be provided in the FOV.

### <1-5-2> Advantageous Effects of Second Modification

The present modification produces advantageous effects similar to those of the first modification of the first arrangement.

### <1-6> Third Modification

A ranging system 1C according to a third modification of the first arrangement changes the number of the ranging points for a part of the angle of view. The ranging system 1C differs from the first modification and the second modification of the first arrangement in terms of setting of the integration number in the FOV. Hereinafter, with respect to the ranging system 1C according to the third modification of the first arrangement, the following description will concentrate on the features different from the first modification and the second modification of the first arrangement.

### <1-6-1> Setting of Integration Number

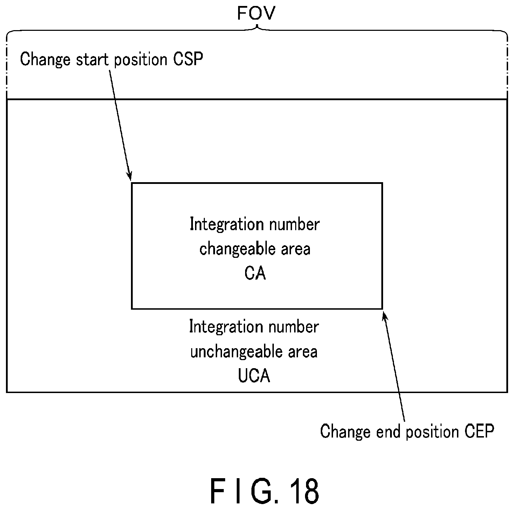

FIG. 18 is a diagram showing an example of setting of the integration number in the FOV in the case of changing the number of the ranging points for a part of the FOV. In FIG. 18, the FOV is divided into two areas, a central area and a peripheral area. The central area is an area in which the number of the ranging points can be changed, that is, the integration number changeable area CA. The peripheral area is an area in which the number of the ranging points is not changed, that is, the integration number unchangeable area UCA. The integration number of the integration number unchangeable area UCA and the integration number of the integration number changeable area CA are set as with the first modification of the first arrangement. In FIG. 18, the change start position CSP is set at the upper left of the central area. The change end position CEP is set at the lower right of the central area. Two or more integration number changeable areas CA may be provided in the FOV.

### <1-6-2> Advantageous Effects of Third Modification

The present modification produces advantageous effects similar to those of the first modification of the first arrangement.

### <2> Second Arrangement

A ranging system 1D according to a second arrangement changes the number of the ranging points based on a relative distance between the stop position target STG and the current position of the transport equipment VE. Hereinafter, with respect to the ranging system 1D according to the second arrangement, the following description will concentrate on the features different from the first arrangement.

### <2-1> Configuration of Ranging System 1D

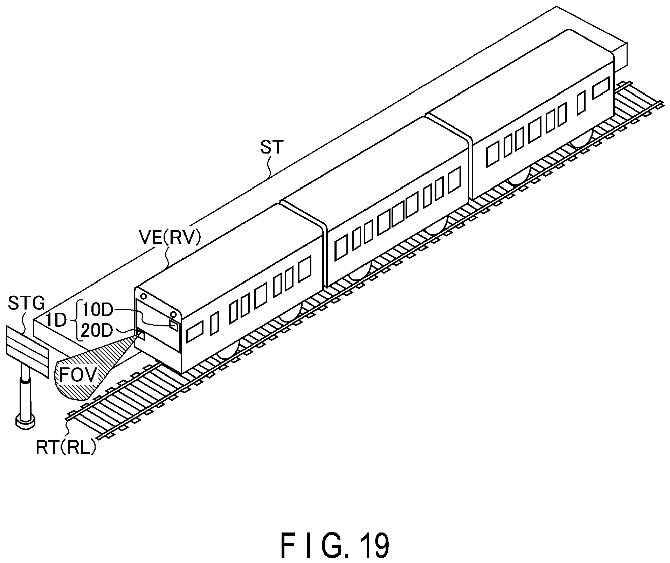

FIG. 19 is a schematic diagram showing an example of a configuration of the ranging system 1D according to the second arrangement. FIG. 19 shows a situation in which the transportation equipment VE provided with the ranging system 1D is traveling at a low speed to stop at the predetermined stop location ST. As shown in FIG. 19, a ranging system 1D according to the second arrangement includes an information processing device 10D and a ranging device 20D. A hardware configuration of the information processing device 10D is similar to that of the information processing device 10 according to the first arrangement, for example. The hardware configuration of the ranging device 20D is similar to that of the ranging device 20 according to the first arrangement, for example.

### <2-2> Functional Configuration of Ranging System 1D

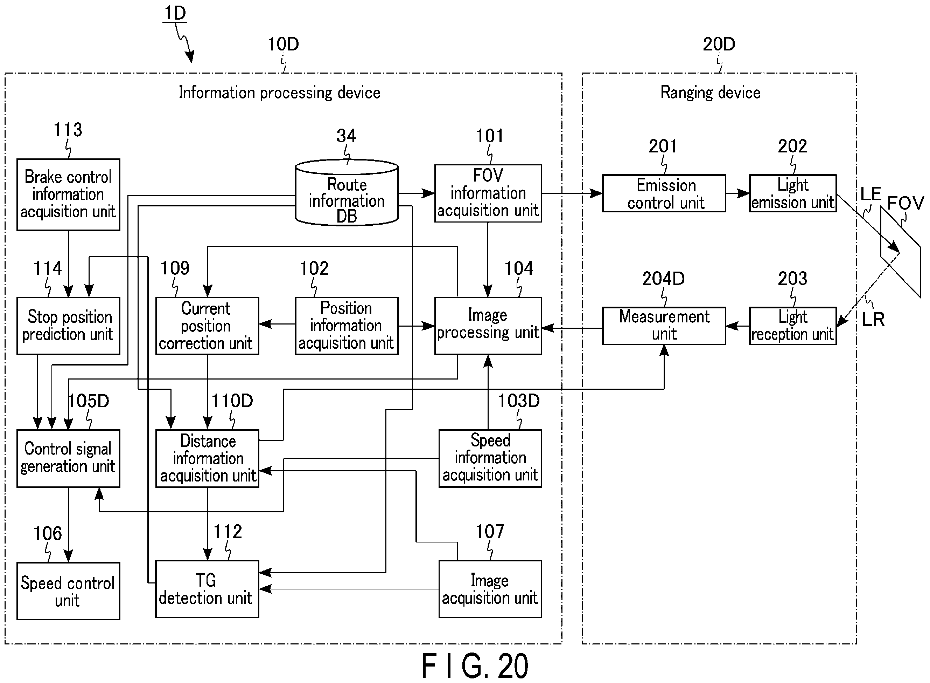

FIG. 20 is a block diagram showing an example of the functional configuration of a ranging system 1D according to the second arrangement. As shown in FIG. 20, in the ranging system 1D, the information processing device 10D functions as the FOV information acquisition unit 101, the position information acquisition unit 102, a speed information acquisition unit 103D, the image processing unit 104, a control signal generation unit 105D, the speed control unit 106, the image acquisition unit 107, the route detection unit 108, the current position correction unit 109, a distance information acquisition unit 110D, the obstacle detection unit 111, a TG detection unit 112, a brake control information acquisition unit 113, a stop position prediction unit 114, and the route information database 34. Note that the route detection unit 108 and the obstacle detection unit 111 are omitted from the illustration. The ranging device 20D functions as the emission control unit 201, the light emission unit 202, the light reception unit 203, and a measurement unit 204D.

The TG detection unit 112 is a functional block corresponding to the image processing device 15. The brake control information acquisition unit 113 and the stop position prediction unit 114 are functional blocks corresponding to the transport equipment control device 13.

The speed information acquisition unit 103D transmits the acquired speed to each of the image processing unit 104 and the control signal generation unit 105D.

The distance information acquisition unit 110D determines a distance from a start point of the transport equipment VE (a relative distance between the transport equipment VE and the subject) based on the corrected current position of the transport equipment VE obtained from the current position correction unit 109, information obtained from the route information database 34, and an image obtained from the image acquisition unit 107. The subject is, for example, the stop position target STG. The distance information acquisition unit 110D transmits the distance from the start point of the transportation equipment VE to the TG detection unit 112.

The TG detection unit 112 detects a stop position target STG based on an image obtained from the image acquisition unit 107, a distance from the start point of the transport equipment VE obtained from the distance information acquisition unit 110D, and a position of the stop position target STG obtained from the route information database 34. In the case of detecting the stop position target STG, the TG detection unit 112 provides the stop position prediction unit 114 with an instruction for predicting a stop position of the transport equipment VE.

The brake control information acquisition unit 113 acquires brake control information. The brake control information acquisition unit 113 transmits the acquired brake control information to the stop position prediction unit 114.

Upon receipt of the instruction from the TG detection unit 112, the stop position prediction unit 114 predicts a brake control amount and a stop position of the transport equipment VE based on the aforementioned control amount based on the accumulated pieces of brake control information obtained from the brake control information acquisition unit 113. The stop position prediction unit 114 transmits the predicted stop position to the control signal generation unit 105D.

The control signal generation unit 105D generates, based on a distance from the start point of the transport equipment VE obtained from the image processing unit 104, a control signal concerning the acceleration/deceleration of the transport equipment VE to perform a brake control in such a manner that the predicted stop position obtained from the stop position prediction unit 114 conforms to a predetermined stop position obtained from the route information database 34 (for example, a position of the stop position target STG). The control signal generation unit 105D then transmits the generated control signal to the speed control unit 106.

The other configurations and operations of the ranging system 1D according to the second arrangement are similar to those of the ranging system 1 according to the first arrangement.

### <2-3> Operation

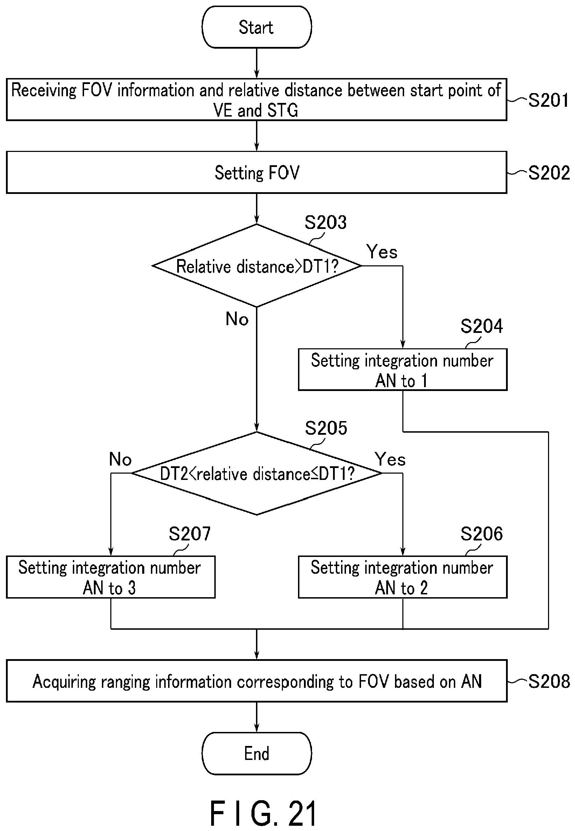

FIG. 21 is a flowchart showing an example of the ranging operation of the ranging device 20D according to the second arrangement. Hereinafter, the ranging operation of the ranging device 20D according to the second arrangement will be described with reference to FIG. 21.

For example, in the case where the ranging device 20D detects the stop position target STG, the ranging operation starts, and the ranging control device 21 receives the FOV information and a relative distance between a start point of the transport equipment VE and the stop position target STG from the information processing device 10 (S201).

Next, the ranging control device 21 sets the FOV based on the FOV information (S202).

The ranging control device 21 then controls the number of the ranging points based on the received relative distance. Specifically, the ranging control device 21 determines whether or not the relative distance is greater than a first distance threshold DT1 (S203). The first distance threshold DT1 is, for example, 500 m.

In the case where the relative distance is greater than the first distance threshold DT1 (S203: YES), the ranging control device 21 sets the integration number AN to 1 (S204).

In the case where the relative distance is equal to or smaller than the first distance threshold DT1 (S203: NO), the ranging control device 21 determines whether or not the relative distance is greater than a second distance threshold DT2 and equal to or smaller than the first distance threshold DT1 (S205). The second distance threshold DT2 is, for example, 50 m.

In the case where the relative distance is greater than the second distance threshold DT2 and equal to or smaller than the first distance threshold DT1 (S205: YES), the ranging control device 21 sets the integration number AN to 2 (S206).

In the case where the relative distance is equal to or smaller than the second distance threshold DT2 (S205: NO), the ranging control device 21 sets the integration number AN to 3 (S207).

Through the execution of steps S203 to S207, the number of the ranging points is changed based on the relative distance between the start point of the transport equipment VE and the stop position target STG.

Next, in the case where the laser light emitted from the laser diode 23 based on the FOV is received by the optical sensor 26 and the light reception result is transferred, the measurement device 27 acquires the ranging information corresponding to the FOV based on the integration number AN (S208).

### <2-4> Advantageous Effects of Second Arrangement

As described above, in the case where the transport equipment VE that is mounted with the LiDAR and travels on a given route is traveling at high speed, the ranging distance performance required for the LiDAR is a ranging performance for a longer distance. On the other hand, for example, in the case where the transport equipment VE is traveling at low speed in order to stop at the stop location ST, this case requires accuracy in measurement of the current position of the transport equipment VE with respect to the stop position target STG of the stop location ST, so that the ranging distance performance required for the LiDAR is a ranging performance for a shorter distance. In order to achieve this, it is required for the number of the ranging points in the ranging information obtained by the LiDAR to be increased by increasing the resolution of an image generated based on the aforementioned ranging information as the relative distance between the stop position target STG and LiDAR decreases.

In the ranging system 1D according to the first arrangement, the information processing device 10D controls the number of the ranging points of the ranging device 20D (LiDAR) based on information collected by a sensor, etc. Specifically, the information processing device 10D acquires a distance from the start point of the transport equipment VE (a relative distance between the transport equipment VE and a subject) based on information obtained from an information collecting device 11D, an image processing device 15D, the route information database 34, etc. The information processing device 10D then transmits the acquired relative distance to the ranging device 20D. Based on the relative distance received from the information processing device 10D, the ranging device 20D changes the setting of the integration number AN for use by a measurement device 27D. For example, the ranging device 20D sets a smaller value to the integration number AN as the relative distance decreases. This enables the ranging device 20D to increase the number of the ranging points as the relative distance decreases. Thus, the ranging device 20D according to the second arrangement can realize the ranging distance performance suited to the case in which the transport equipment VE is traveling at a low speed in order to stop at the stop location ST. That is, the ranging device 20D according to the second arrangement can improve the ranging distance performance. Therefore, the transport equipment VE using the ranging system 1D according to the second arrangement can obtain many ranging points with respect to the stop position target STG of the stop location ST. As a result, the measurement accuracy of the current position of the transport equipment VE can be improved.

### <2-5> Modification

A ranging system 1E according to a modification of the second arrangement changes the number of the ranging points for a part of the angle of view. Hereinafter, with respect to the ranging system 1E according to the modification of the second arrangement, the following description will concentrate on the features different from the second arrangement.

### <2-5-1> Setting of Integration Number

The setting of the integration number in the FOV in the case of changing the number of the ranging points for a part of the FOV is similar to that shown in FIG. 14 described in the first modification of the first arrangement. Meanwhile, the integration number in the FOV in the case of changing the number of the ranging points for a part of the FOV may be set in a similar manner to that shown in FIG. 15 described in the second modification of the first arrangement or that shown in FIG. 16 described in the third modification of the first arrangement. The change start position CSP and the change end position CEP may be dynamically set using a relative position geometrically calculated from three-dimensional position information of the stop position target STG and size information stored in the route information database 34, and the current position of the transport equipment VE. Furthermore, by using luminance information from the reflection intensity of laser light obtained along with a distance at the time of ranging by the ranging device 20 in the vicinity of the relative position obtained through the above calculation, a position within the angle of view obtained as a result of pattern matching through image processing with a pattern drawn on the stop position target STG stored in the route information database 34 or formed of a pattern in a predetermined range may be dynamically changed.

### <2-5-2> Functional Configuration of Ranging System 1E

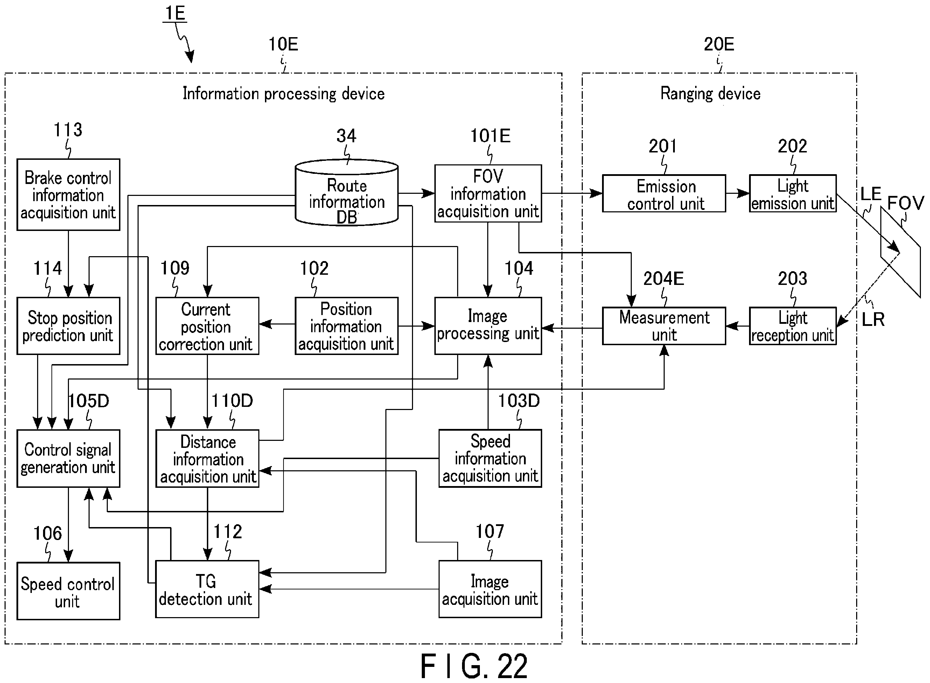

FIG. 22 is a block diagram showing an example of a functional configuration of the ranging system 1E according to the first modification of the second arrangement.

An FOV information acquisition unit 101E transmits FOV information to a measurement unit 204E in addition to the operation of the FOV information acquisition unit 101 described in the first arrangement.

The measurement unit 204E sets the initial integration number AN0 based on the FOV information received from the FOV information acquisition unit 101E. The measurement unit 204E also sets the change start position CSP and the change end position CEP based on the FOV information. The measurement unit 204E sets the integration number AN based on the distance from the start point of the transport equipment VE received from the distance information acquisition unit 110 (a relative distance between the transport equipment VE and the stop position target STG).

The measurement unit 204E generates distance data corresponding to the number of the ranging points based on the electrical signal (light reception result) received from the light reception unit 203, the initial integration number AN0, the change start position CSP, the change end position CEP, and the integration number AN. That is, the distance data corresponding to the integration number unchangeable area UCA in the FOV is acquired based on the initial integration number AN0. The distance data corresponding to the integration number changeable area CA in the FOV is acquired based on the integration number AN. As a result, the ranging information corresponding to the FOV is acquired.

The other configurations and operations of the ranging system 1E according to the modification of the second arrangement are the same as those of the ranging system 1D according to the second arrangement.

### <2-5-3> Operation

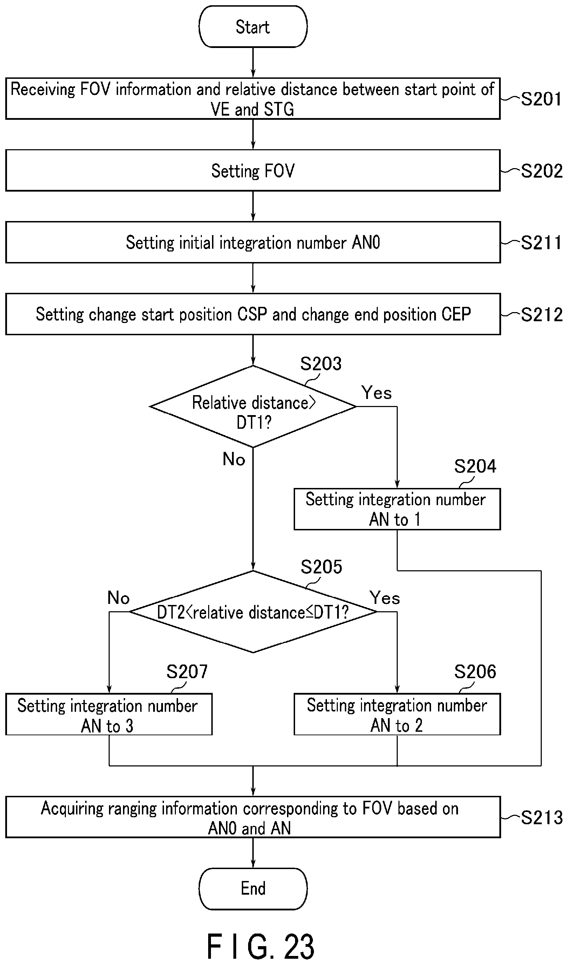

FIG. 23 is a flowchart showing an example of the ranging operation of a ranging device 20E according to a modification of the second arrangement. FIG. 23 includes additional steps S211 and S212 after step S202 of FIG. 21 described in the second arrangement, and includes step S213 in place of step S208 of FIG. 21. Hereinafter, the ranging operation of the ranging device 20E according to the modification of the second arrangement will be described with reference to FIG. 23.

In step S202, in the case where the FOV is set, the ranging control device 21 sets the initial integration number AN0 based on the FOV information (S211).

The ranging control device 21 then sets the change start position CSP and the change end position CEP based on the FOV information (S212).

Next, after the execution of steps S203 to S207, in the case where the laser light emitted from the laser diode 23 based on the FOV is received by the optical sensor 26 and the light reception result is transferred, the measurement device 27 acquires the ranging information corresponding to the FOV based on the initial integration number AN0 and the integration number AN (S213).

### <2-5-4> Advantageous Effects of Modification

The present modification produces advantageous effects similar to those of the second arrangement.

Further, in this modification, an information processing device 10E sets an area in which the number of the ranging points within the angle of view can be changed. Specifically, the information processing device 10E sets the integration number changeable area CA, the change start position CSP, and the change end position CEP for the angle of view. The information processing device 10E then controls the number of the ranging points of the ranging device 20E (LiDAR) based on the integration number changeable area CA, the change start position CSP, and the change end position CEP, each set for the angle of view, and the information collected by a sensor, etc. This enables the ranging device 20E to increase the number of the ranging points and increase the resolution of an image generated based on the ranging information, for a specific area (for example, the area of the stop position target STG within the angle of view). Therefore, the transport equipment VE using the ranging system 1E according to the modification of the second arrangement can improve the detection accuracy of a target (for example, the stop position target STG).

### <3> Third Arrangement

A ranging system 1F according to a third arrangement includes a ranging mode for executing the ranging operation and a weather determination mode for executing the weather determination, and changes the number of the ranging points based on a weather determined in the weather determination mode. Hereinafter, with respect to the ranging system 1F according to the third arrangement, the following description will concentrate on the features different form the first arrangement.

### <3-1> Configuration of Ranging Device 20F

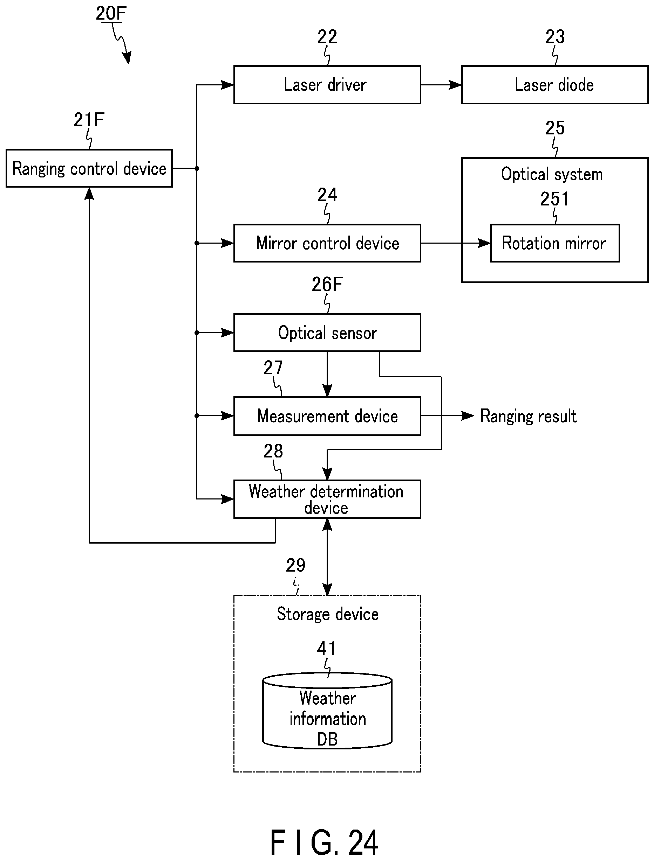

FIG. 24 is a block diagram showing an example of a configuration of the ranging device 20F according to the third arrangement. As shown in FIG. 24, the ranging device 20F includes the weather determination device 28 and a storage device 29 in addition to the configuration of the ranging device 20 described in the first arrangement.

In addition to the operation of the ranging control device 21 described in the first arrangement, a ranging control device 21F controls the weather determination device 28.

Based on a light reception result transferred from the optical sensor 26F, the weather determination device 28 determines the weather. The weather determination device 28 transmits a determination result to the ranging control device 21F.

The storage device 29 is a storage medium used in storing data, programs, etc. The storage device 29 stores, for example, a weather information database (DB) 41 that includes information on the weather. The information stored in the storage device 29 may be downloaded via a server on the network.

The weather information database 41 stores information on the weather (hereinafter referred to as "weather information"), information on the rainfall amount (hereinafter referred to as "rainfall amount information"), information on the visibility (hereinafter referred to as "visibility information"), etc. Examples of the weather information include rain, fog, snow, etc. Examples of the rainfall amount information include the rainfall amount (precipitation) in a given period of time. Examples of the visibility information include a distance indicating an extent of a distance that falls in a visible range.

The other configurations of the ranging device 20F are similar to that shown in FIG. 20 described in the first arrangement.

### <3-2> Weather Determination Processing

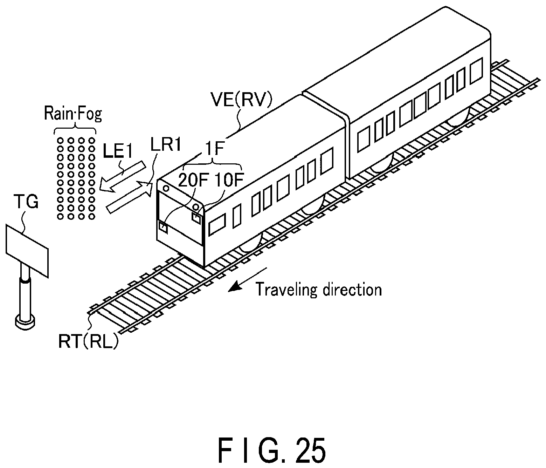

FIG. 25 is a diagram illustrating an example of the weather determination processing performed by the weather determination device 28. FIG. 25 shows a situation in which the transport equipment VE provided with the ranging system 1F is traveling in a traveling direction indicated by an arrow on a predetermined route RT under rainy or foggy weather.

In the case of rainy or foggy weather, laser light LE1 emitted from the ranging device 20F toward an area in which the subject TG does not exist (for example, the sky, etc.) is reflected by rain or fog, and reflected laser light LR1 (returned from the area in which the subject TG does not exist) is received by the optical sensor 26. Since a rainy or foggy area is relatively wide, the distance from the ranging device 20F to the position at which laser light is reflected by rain or fog is relatively close to the ranging device 20F.

Furthermore, in the case of foggy weather, as the fog becomes thicker, the amount of laser light received by the optical sensor 26 increases. In the case of rainy weather, as the rainfall amount increases, the amount of laser light received by the optical sensor 26 increases. In the case of rainy weather, the amount of laser light received by the optical sensor 26 is larger than that in the case of foggy weather.

Therefore, the weather determination device 28 determines the weather based on the intensity of the laser light LR1 returned from the area in which the subject TG does not exist. Specifically, the weather determination device 28 designates a specific area (for example, the upper side of the angle of view) with a relatively high probability of the subject TG in the angle of view being absent. The weather determination device 28 acquires the amount of laser light received per unit time at a corresponding pixel of the optical sensor 26 in the designated area. The weather determination device 28 acquires a pixel of the optical sensor 26 that has received the laser light reflected within a relatively short distance (for example, within 10 meters from the ranging device 20F) and the peak value PKN of the intensity of the reflected laser light. Furthermore, the weather determination device 28 calculates an average value PKA of the peak values of the intensity of the laser light reflected in the designated area. Then, the weather determination device 28 calculates a probability PB that the peak value PKN of the acquired intensity of laser light exceeds the average value PKA of the peak values. In the case where the probability PB is equal to or greater than a predetermined threshold, the weather determination device 28 determines that the weather is rainy, and acquires the rainfall amount corresponding to the calculated probability PB from the rainfall amount information in which a correspondence relationship between each probability PB and each rainfall amount stored in advance in the weather information database 41 is defined. In the case where the probability PB is smaller than the predetermined threshold, the weather determination device 28 determines that the weather is foggy, and acquires the visibility corresponding to the calculated probability PB from the visibility information in which a correspondence relationship between each probability PB and each visibility stored in advance in the weather information database 41 is defined.

### <3-3> Functional Configuration of Ranging System 1F

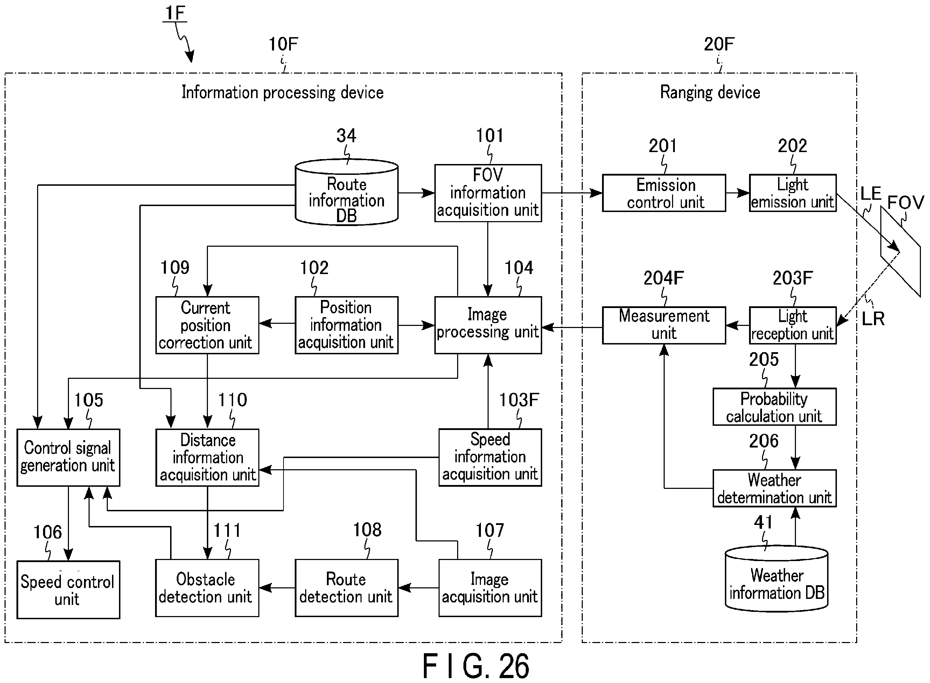

FIG. 26 is a block diagram showing an example of the functional configuration of the ranging system 1F according to a third arrangement. As shown in FIG. 26, in the ranging system 1F, an information processing device 10F functions as the FOV information acquisition unit 101, the position information acquisition unit 102, a speed information acquisition unit 103F, the image processing unit 104, the control signal generation unit 105, the speed control unit 106, the image acquisition unit 107, the route detection unit 108, the current position correction unit 109, the distance information acquisition unit 110, the obstacle detection unit 111, and the route information database 34. The ranging device 20F functions as the emission control unit 201, the light emission unit 202, a light reception unit 203F, a measurement unit 204F, a probability calculation unit 205, a weather determination unit 206, and the weather information database 41.

The probability calculation unit 205 and the weather determination unit 206 are functional blocks corresponding to the weather determination device 28.

The speed information acquisition unit 103F transmits the acquired speed to each of the image processing unit 104 and the control signal generation unit 105D.

The probability calculation unit 205 acquires a light reception result from the light reception unit 203F. The probability calculation unit 205 designates a specific area with a relatively high probability of the subject TG in the angle of view being absent. The probability calculation unit 205 acquires the amount of laser light received per unit time at a corresponding pixel of the light reception unit 203F in the designated area. The probability calculation unit 205 acquires a pixel of the light reception unit 203F that has received the laser light reflected within a predetermined distance and the peak value PKN of the intensity of this reflected laser light. Furthermore, the probability calculation unit 205 calculates an average value PKA of the peak values of the intensity of the laser light reflected in the designated area. The probability calculation unit 205 calculates the probability PB that the peak value PKN of the acquired intensity of laser light exceeds the average value PKA of the peak values. The probability calculation unit 205 transmits the calculated probability PB to the weather determination unit 206.

The weather determination unit 206 determines the weather based on the probability PB obtained from the probability calculation unit 205, and acquires information (rainfall amount or visibility) corresponding to the weather from the weather information database 41. The weather determination unit 206 transmits the acquired information (weather determination result) to the measurement unit 204F.

The other configurations and operations of the ranging system 1F according to the third arrangement are similar to those of the ranging system 1 according to the first arrangement.

### <3-4> Operation

### (Weather Determination Operation)

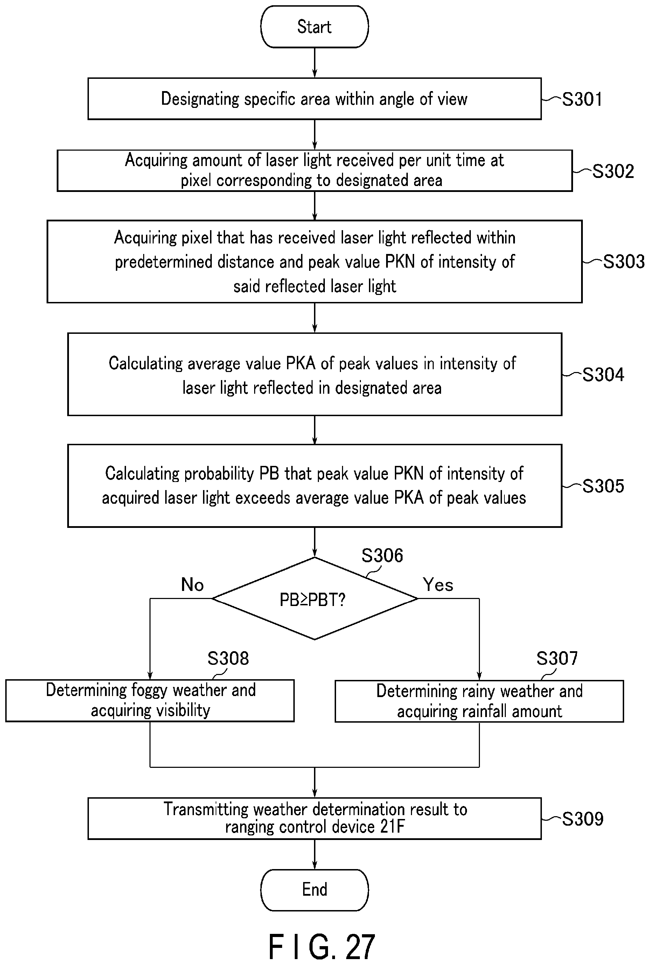

FIG. 27 is a flowchart showing an example of the weather determination operation of the ranging device 20F according to the third arrangement. Hereinafter, the weather determination operation of the ranging device 20F according to the third arrangement will be described with reference to FIG. 27.

For example, in the case where the ranging system 1F is set to the weather determination mode, the weather determination operation is started, and the weather determination device 28 designates a specific area (for example, the upper side of the angle of view) in the angle of view (S301).

The weather determination device 28 then acquires the amount of laser light received per unit time at a corresponding pixel of the optical sensor 26F in the designated area (S302).

The weather determination device 28 acquires a pixel of the optical sensor 26F that has received the laser light reflected within a predetermined distance (for example, within 10 meters from the ranging device 20F) and the peak value PKN of the intensity of the reflected laser light (S303).

Next, the weather determination device 28 calculates the average value PKA of the peak values of the intensity of the laser light reflected in the designated area (S304).

The weather determination device 28 then calculates the probability PB that the peak value PKN of the intensity of the acquired laser light exceeds the average value PKA of the peak values (S305).

Next, the weather determination device 28 determines whether or not the probability PB is equal to or greater than the predetermined threshold PBT (S306). The predetermined threshold PBT is, for example, a threshold for determining rain and fog.

In the case where the probability PB is equal to or greater than the predetermined threshold PBT (S306: YES), the weather determination device 28 determines that the weather is rainy, and acquires the rainfall amount based on the probability PB (S307).

In the case where the probability PB is smaller than the predetermined threshold PBT (S306: NO), the weather determination device 28 determines that the weather is foggy, and acquires the visibility based on the probability PB (S308).

The weather determination device 28 transmits a weather determination result (information on the weather) including the acquired weather information (the rainfall amount or the visibility) to the ranging control device 21 (S309) .

Hereinafter, the operation from steps S301 to S309 will be described as a "first weather determination operation".

### (Ranging Operation)

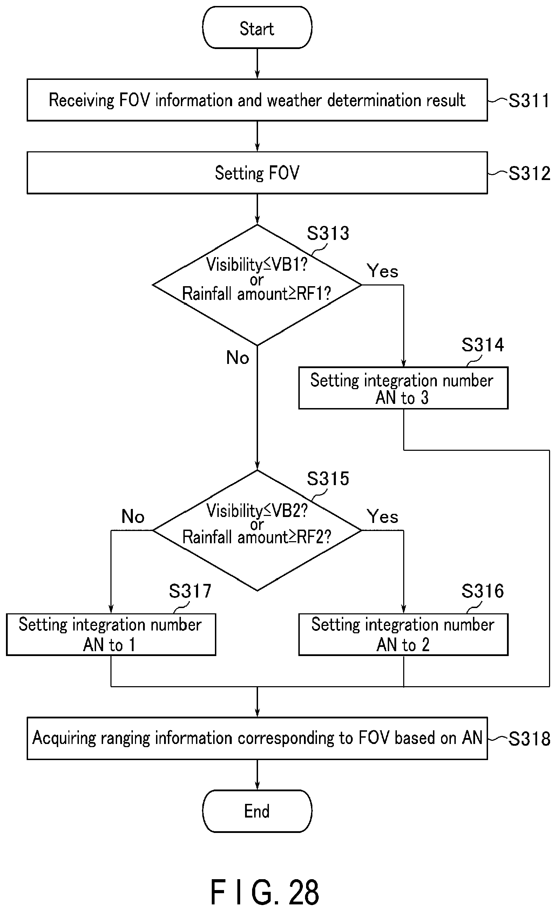

FIG. 28 is a flowchart showing an example of the ranging operation of the ranging device 20F according to the third arrangement. Hereinafter, the ranging operation of the ranging device 20F according to the third arrangement will be described with reference to FIG. 28.

For example, in the case where the ranging system 1F is set to the ranging mode, the ranging operation starts, and the ranging control device 21F receives the FOV information from the information processing device 10F and receives the weather determination result from the weather determination device 28 (S311).

The ranging control device 21F then sets the FOV based on the FOV information (S312).

Next, the ranging control device 21F controls the number of the ranging points based on the received weather determination result. Specifically, the ranging control device 21F determines whether or not the visibility is equal to or smaller than the first visibility threshold VB1 or the rainfall amount is equal to greater than the first rainfall amount threshold RF1 (S313). The first visibility threshold VB1 is, for example, 80 m. The first rainfall amount threshold RF1 is, for example, 50 mm/h.

In the case where the visibility is equal to or smaller than the first visibility threshold VB1 or the rainfall amount is equal to or greater than the first rainfall amount threshold RF1 (S313: YES), the ranging control device 21F sets the integration number AN to 3 (S314).

In the case where the visibility is greater than the first visibility threshold VB1 or the rainfall amount is smaller than the first rainfall amount threshold RF1 (S313: NO), the ranging control device 21F determines whether or not the visibility is equal to or smaller than the second visibility threshold VB2 or the rainfall amount is equal to or greater than the second rainfall amount threshold RF2 (S315). The second visibility threshold VB2 is, for example, 120 m. The second rainfall amount threshold RF2 is, for example, 30 mm/h.

In the case where the visibility is equal to or smaller than the second visibility threshold VB2 or the rainfall amount is equal to or greater than the second rainfall amount threshold RF2 (S315: YES), the ranging control device 21 sets the integration number AN to 2 (S316).

In the case where the visibility is greater than the second visibility threshold VB2 or the rainfall amount is smaller than the second rainfall amount threshold RF2 (S315: NO), the ranging control device 21 sets the integration number AN to 1 (S317).

Through the execution of steps S313 to S317, the number of the ranging points is changed based on the weather determination result based on the intensity of the reflected light of the laser light emitted toward a specific area with a relatively high probability of the subject TG in the angle of view being absent.

Next, in the case where the laser light emitted from the laser diode 23 based on the FOV is received by the optical sensor 26F and the light reception result is transferred, the measurement device 27 acquires the ranging information corresponding to the FOV based on the integration number AN (S318).

### <3-5> Advantageous Effects of Third Arrangement

In the present arrangement, the ranging device 20F emits the laser light toward an area with a relatively high probability of the subject TG being absent, the reflected light of the laser light is received by the optical sensor 26F, and then the weather determination is made based on the intensity of the reflected light. In this manner, the ranging device 20F can perform the weather determination more easily.

Furthermore, as described above, in the case where the transport equipment VE that is mounted with the LiDAR and travels on a given route is traveling at a low speed in order to stop at the stop location ST, this case requires accuracy in measurement of the current position of the transport equipment VE with respect to the stop position target STG of the stop location ST, so that the ranging distance performance required for the LiDAR is a ranging performance for a shorter distance. On the other hand, for example, in the case of rainy or foggy weather, it is requested for the ranging information obtained by the LiDAR that the resolution of an image generated based on this ranging information be higher as the weather gets worse (for example, as the rainfall amount increases or the fog gets thicker). That is, the ranging information obtained by the LiDAR is required to exhibit fewer ranging points as the weather gets worse.

Therefore, in the ranging system 1F according to the third arrangement, as described above, the ranging device 20F performs weather determination based on the intensity of the reflected light. The ranging device 20F controls the number of the ranging points of a ranging device 20F (LiDAR) based on the determination result obtained through the weather determination. Specifically, the ranging device 20F changes the setting of the integration number AN used in a measurement device 27F based on the determination result obtained through the weather determination. For example, the ranging device 20F sets a larger value to the integration number AN as the weather gets worse. This enables the ranging device 20F to decrease the number of the ranging points as the weather gets worse. Therefore, the ranging device 20F according to the third arrangement can realize ranging distance performance suited to the case in which the weather is rainy or foggy. That is, the ranging device 20F according to the third arrangement can improve the ranging distance performance. Therefore, the transport equipment VE using the ranging system 1F according to the third arrangement can improve the accuracy of visibility.

### <3-6> First Modification

The ranging system 1G according to the first modification of the third arrangement changes the number of ranging points based on the weather determined in the weather determination mode. The ranging system 1G differs from the third arrangement in terms of the weather determination processing. Hereinafter, with respect to the ranging system 1G according to the first modification of the third arrangement, the following description will concentrate on the features different from that third arrangement.

### <3-6-1> Weather Determination Processing

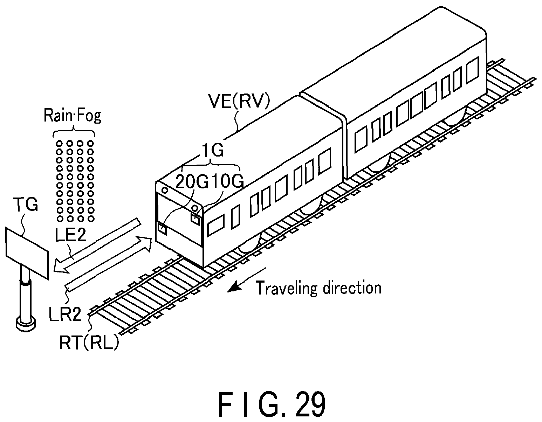

FIG. 29 is a diagram illustrating an example of the weather determination processing performed by a weather determination device 28G. FIG. 29 shows a situation in which the transport equipment VE provided with the ranging system 1G is traveling in a traveling direction indicated by an arrow on a predetermined route RT under rainy or foggy weather.

In the case of rainy or foggy weather, the laser light LE2 emitted from the ranging device 20G toward the subject TG is attenuated by rain or fog, so that the amount of the laser light LR2 reflected by the subject TG is lower than the amount of the laser light LE2. For this reason, with the knowledge of the reflectivity of the subject TG, the distance between the ranging device 20G and the subject TG, and the amount of decrease in the laser light LR2 with respect to the laser light LE2, the air permeability between the ranging device 20G and the subject TG can be calculated.

Furthermore, in the case of foggy weather, as the fog becomes thicker, the amount of decrease in the laser light LR2 with respect to the laser light LE2 increases. That is, as the fog becomes thicker, the amount of decrease in the air permeability between the ranging device 20G and the subject TG also increases. In the case of rainy weather, as the rainfall amount increases, the amount of decrease in laser light LR2 with respect to the laser light LE2 increases. That is, as the rainfall amount increases, the amount of decrease in air permeability between the ranging device 20G and the subject TG also increases. In the case of rainy weather, the amount of decrease in laser light LR2 with respect to laser light LE2 is larger than that in the case of foggy weather. That is, in the case of rainy weather, the amount of decrease in air permeability between the ranging device 20G and the subject TG is larger than that in the case of foggy weather.

Therefore, the ranging device 20G causes the weather information database 41 to store the reflectivity of the subject TG stored in the route information database 34, the visibility information in which a correspondence relationship between the air permeability and the visibility is defined, and the rainfall amount information in which a correspondence relationship between the air permeability and the rainfall amount is defined, in advance. The weather determination device 28G acquires a position of the subject TG whose reflectivity within the angle of view is known from the route information database 34. The weather determination device 28G acquires laser light received at a pixel of the optical sensor 26G, corresponding to the position of the subject TG in the angle of view. Then, after calculating the amount of decrease in laser light, the weather determination device 28G calculates the air permeability TR between the ranging device 20G and the subject TG based on the amount of decrease in laser light, the position of the subject TG, and the reflectivity of the subject TG. The weather determination device 28G acquires the visibility corresponding to the calculated permeability TR from the visibility information stored in the weather information database 41. The weather determination device 28G acquires the rainfall amount corresponding to the calculated permeability TR from the rainfall amount information stored in the weather information database 41.

### <3-6-2> Functional Configuration of Ranging System 1G

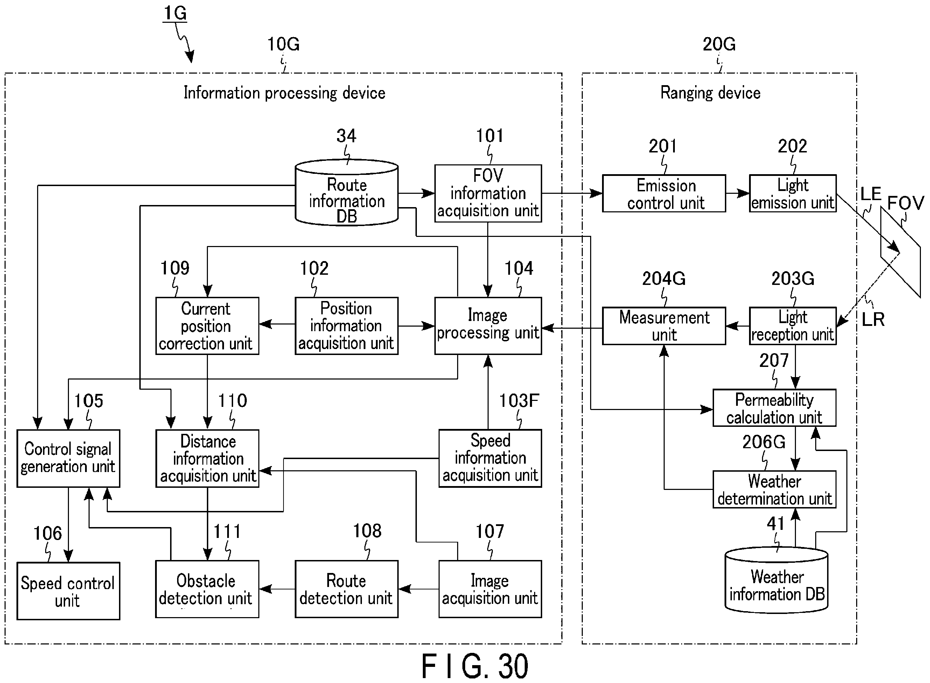

FIG. 30 is a block diagram showing an example of a functional configuration of the ranging system 1G according to the first modification of the third arrangement. As shown in FIG. 30, in the ranging system 1G, the information processing device 10G functions as the FOV information acquisition unit 101, the position information acquisition unit 102, the speed information acquisition unit 103F, the image processing unit 104, the control signal generation unit 105, the speed control unit 106, the image acquisition unit 107, the route detection unit 108, the current position correction unit 109, the distance information acquisition unit 110, the obstacle detection unit 111, and the route information database 34. The ranging device 20G functions as the emission control unit 201, the light emission unit 202, the light reception unit 203G, the measurement unit 204G, the weather determination unit 206G, a permeability calculation unit 207, and the weather information database 41.

The permeability calculation unit 207 is a functional block corresponding to the weather determination device 28G.

The permeability calculation unit 207 acquires a position of the subject TG whose reflectivity within the angle of view is known from the route information database 34. The permeability calculation unit 207 acquires the reflectivity of the subject TG from the weather information database 41. The permeability calculation unit 207 acquires laser light received at a pixel of the light reception unit 203G corresponding to a position of the subject TG within the angle of view. The permeability calculation unit 207 then calculates the amount of decrease in laser light. The permeability calculation unit 207 calculates the air permeability TR between the ranging device 20G and the subject TG based on the reflectivity of the subject TG, the distance between the ranging device 20G and the subject TG, and the calculated amount of decrease. The permeability calculation unit 207 transmits the calculated permeability TR to the weather determination unit 206G.

The weather determination unit 206G acquires information (rainfall amount or visibility) corresponding to the weather from the weather information database 41 based on the permeability TR obtained from the permeability calculation unit 207. The weather determination unit 206G transmits the acquired information (weather determination result) to the measurement unit 204G.

The other configurations and operations of the ranging system 1G according to the first modification of the third arrangement are the same as those of the ranging system 1F according to the third arrangement.

### <3-6-3> Operation

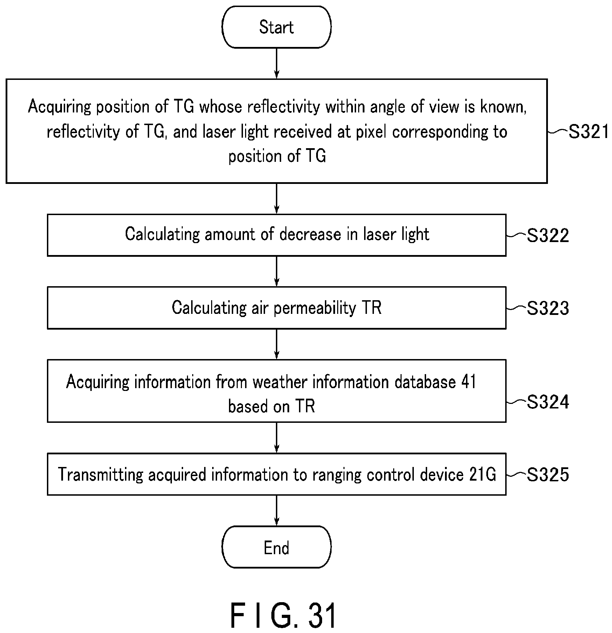

FIG. 31 is a flowchart showing an example of the weather determination operation of the ranging device 20G according to the first modification of the third arrangement. Hereinafter, the weather determination operation of the ranging device 20G according to the first modification of the third arrangement will be described with reference to FIG. 31.

For example, in the case where the ranging system 1G is set to the weather determination mode, the weather determination operation is started, and the weather determination device 28G acquires a position of the subject TG whose reflectivity within the angle of view is known, the reflectivity of the subject TG, and laser light received at a pixel of the optical sensor 26G corresponding to the position of the subject TG within the angle of view (S321). The position of the subject TG is acquired from the route information database 34. The reflectivity of the subject TG is acquired from the weather information database 41. The received laser light is acquired from the optical sensor 26G.

Next, the weather determination device 28G calculates the amount of decrease in laser light based on the received laser light (S322).

Next, the weather determination device 28G calculates the air permeability TR between the ranging device 20G and the subject TG based on the reflectivity of the subject TG, the distance between the ranging device 20G and the subject TG, and the calculated amount of decrease (S323).

Next, the weather determination device 28G acquires information (rainfall amount or visibility) corresponding to the weather from the weather information database 41 based on the calculated permeability TR (S324).

Next, the weather determination device 28G transmits the acquired information (weather determination result) to the ranging control device 21G (S325).

Hereinafter, the operation from step S321 to step S325 will be referred to as "second weather determination operation".

### <3-6-4> Advantageous Effects of First Modification

The present modification produces advantageous effects similar to those of the third arrangement.

In this modification, the ranging device 20G emits laser light toward an area in which a specific subject whose reflectivity has been known exists, causes the optical sensor 26F to receive reflected laser light corresponding to the emission laser light with the optical sensor 26F, calculates the amount of decrease in reflection laser light with respect to the emission light, and calculates the air permeability between the ranging device 20G and the specific subject based on the calculated amount of decrease. The ranging device 20G then performs the weather determination based on the calculated air permeability. In this manner, the ranging device 20G can perform weather determination more simply as with the third arrangement.

### <3-7> Second Modification

A ranging system 1H according to the second modification of the third arrangement changes the number of ranging points based on the weather determined in the weather determination mode. The ranging system 1H differs from that of the third arrangement in terms of conducting the weather determination based on a determination result of the first weather determination operation and a determination result of the second weather determination operation. Hereinafter, with respect to the ranging system 1H according to the second modification of the third arrangement, the following description will concentrate on the features different from that of the third arrangement.

### <3-7-1> Functional Configuration of Ranging System 1H

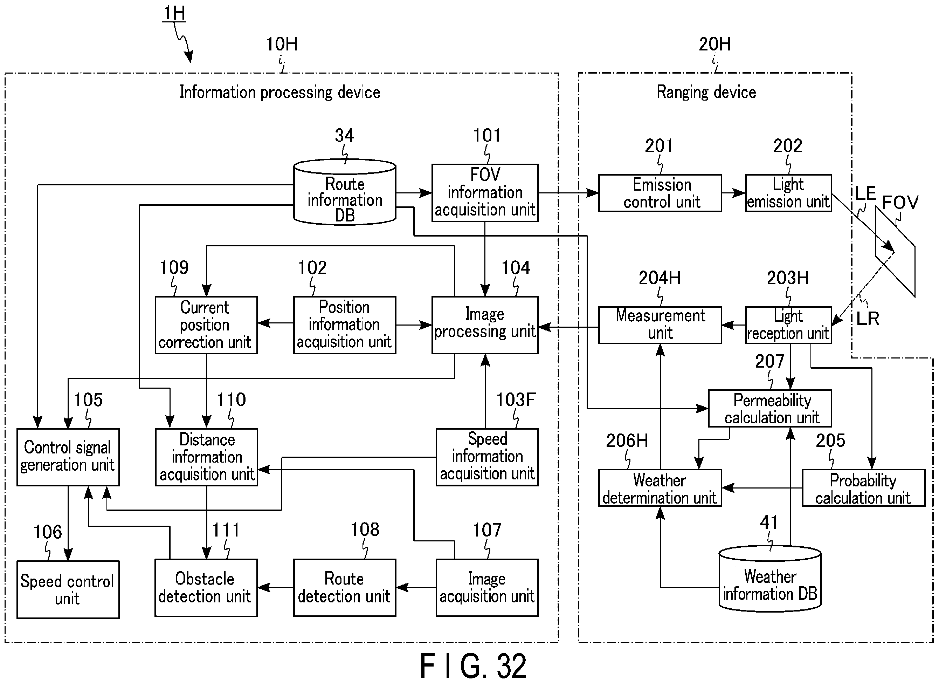

FIG. 32 is a block diagram showing an example of a functional configuration of the ranging system 1H according to the second modification of the third arrangement. As shown in FIG. 32, in the ranging system 1H, the information processing device 10H functions as the FOV information acquisition unit 101, the position information acquisition unit 102, the speed information acquisition unit 103F, the image processing unit 104, the control signal generation unit 105, the speed control unit 106, the image acquisition unit 107, the route detection unit 108, the current position correction unit 109, the distance information acquisition unit 110, the obstacle detection unit 111, and the route information database 34. A ranging device 20H functions as the emission control unit 201, the light emission unit 202, a light reception unit 203H, a measurement unit 204H, the probability calculation unit 205, a weather determination unit 206H, the permeability calculation unit 207, and the weather information database 41.

The weather determination unit 206H performs the same operations as the weather determination unit 206F described in the third arrangement and the weather determination unit 206G described in the first modification of the third arrangement.

Of a weather determination result obtained through the first weather determination operation and a weather determination result obtained through the second weather determination operation, the weather determination unit 206H acquires a result indicating the worse weather. The weather determination unit 206H transmits the acquired result to the measurement unit 204H.

The other configurations and operations of the ranging system 1H according to the second modification of the third arrangement are the same as those of the ranging system 1F according to the third arrangement.

### <3-7-2> Operation

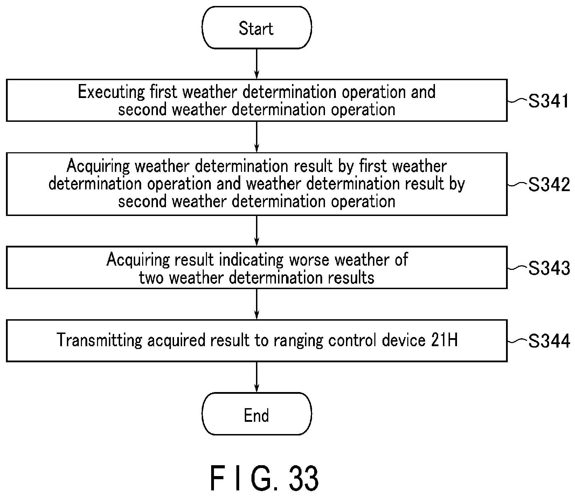

FIG. 33 is a flowchart showing an example of weather determination operation of the ranging device 20H according to the second modification of the third arrangement. Hereinafter, the weather determination operation of the ranging device 20H according to the second modification of the third arrangement will be described with reference to FIG. 33.

For example, in the case where the ranging system 1H is set to the weather determination mode, the weather determination operation is started, and the weather determination device 28H executes the first weather determination operation and the second weather determination operation (S341).

The weather determination device 28H then acquires a weather determination result through the first weather determination operation (hereinafter referred to as the "first weather determination result") and a weather determination result through the second weather determination operation (hereinafter referred to as the "second weather determination result") (S342).

Next, the weather determination device 28H acquires a result indicating the worse weather of the first weather determination result and the second weather determination result (S343). For example, in the case where one determination result indicates rainy weather and the other determination result indicates foggy weather, the weather determination device 28H acquires the determination result indicating rainy weather. In the case where both determination results indicate rainy weather, the weather determination device 28H acquires the determination result indicating the greater rainfall amount. In the case where both determination results indicate foggy weather, the weather determination device 28H acquires the determination result indicating the lower visibility.

Subsequently, the weather determination device 28H transmits the acquired result to the ranging control device 21H (S344).

### <3-7-3> Advantageous Effects of Second Modification

The present modification produces advantageous effects similar to those of the third arrangement.

In the present modification, the ranging device 20H executes the first weather determination operation and the second weather determination operation. Then, of the first weather determination result through the first weather determination operation and the second weather determination result through the second weather determination operation, the ranging device 20H acquires the result indicating the worse weather. This enables the ranging device 20H to improve the accuracy of the weather determination as compared to the case in which the weather determination is performed through the first weather determination operation or the second weather determination operation.

### <3-8> Third Modification

A ranging system 1I according to the third modification of the third arrangement changes the number of ranging points based on the weather determined in the weather determination mode. The ranging system 1I differs from that of the third arrangement in that a ranging device 20I is arranged outside the route RT. Hereinafter, with respect to the ranging system 1I according to the third modification of the third arrangement, the following description will concentrate on the features different from that of the third arrangement.

### <3-8-1> Configuration of Ranging System 1I

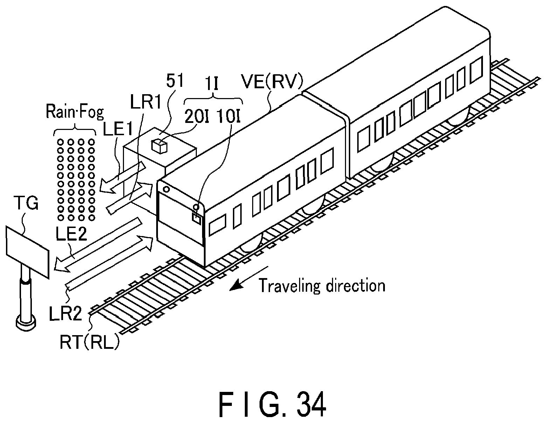

FIG. 34 is a schematic diagram showing an example of a configuration of the ranging system 1I according to the third modification of the third arrangement. As shown in FIG. 34, an information processing device 10I is mounted on the transport equipment VE. A ranging device 20I is disposed outside the route RT on which the transport equipment VE travels. Specifically, the ranging device 20I is installed on an installation stand 51 disposed outside the route RT. The information processing device 10I and the ranging device 201 are configured to communicate via a network (not shown).

With the above configuration, the ranging device 20I can execute the weather determination operation and the ranging operation as with the third arrangement.

### <3-8-2> Advantageous Effects of Third Modification

The present modification produces advantageous effects similar to those of the third arrangement.

### <4> Others

The above arrangements may be combined to the extent possible. For example, the second and third modifications of the first arrangement may be combined with the second arrangement.

The arrangements are not limited to those described in the above, and various modifications can be made.

The determination of the weather described in the third arrangement may be performed based on an image acquired from the camera 33. Such a case may further combine a determination result obtained through the first weather determination operation or a determination result obtained through the second weather determination operation and adopt the determination result which indicates the worse weather.

Furthermore, the order of the steps in the flowchart described in the above arrangements may be altered to the extent possible.

Each processing described in each arrangement may be implemented by dedicated hardware. Each arrangement includes a mixture of processing executed by software and processing executed by hardware, or only one of them. The ranging control device 21 and the CPU may be referred to as "control circuits" or "processors". The measurement device 27 may be referred to as a "measurement circuit". The laser diode 23 may be referred to as a "light source". The weather determination device 28 may be referred to as a "determination circuit".

The above arrangements described a case in which the ranging device 20 executes a multi-channel raster scanning; however, another scanning method may be used. For example, as another scanning method, the ranging device 20 may use "raster scanning", "multi-channel scanning", the "optical phased array (OPA) method", etc.

Clause 1. A ranging device comprising:
a light source configured to emit first laser light;
an optical sensor configured to detect second laser light corresponding to the first laser light reflected by an external subject;
a measurement circuit configured to measure a distance to the subject based on a timing at which the light source emits the first laser light and a timing at which the optical sensor detects the second laser light; and
a control circuit configured to control a number of ranging points indicating a number of distances measured per unit time by the measurement circuit in a predetermined area within an angle of view of the ranging device.

Clause 2. The ranging device according to clause 1, wherein the control circuit controls the number of the ranging points based on a relative speed between the ranging device and the subject.

Clause 3. The ranging device according to clause 2, wherein the control circuit is configured to:
in a case where the relative speed is equal to or smaller than a first threshold value, set the number of the ranging points to a first value,
in a case where the relative speed is greater than the first threshold value and is equal to or smaller than a second threshold value, set the number of the ranging points to a second value smaller than the first value, and in a case where the relative speed is greater than the second threshold value, set the number of the ranging points to a third value smaller than the second value.

Clause 4. The ranging device according to clause 3, wherein the control circuit sets the number of the ranging points to a fourth value in a first area within the angle of view, and sets the number of the ranging points to the first value, the second value, or the third value based on the relative speed in a second area within the angle of view.

Clause 5. The ranging device according to clause 1, wherein the control circuit controls the number of the ranging points based on a relative distance between the ranging device and the subject.

Clause 6. The ranging device according to clause 5, wherein the control circuit is configured to:
in a case where the relative distance is greater than a third threshold value, set the number of the ranging points to a fifth value,
in a case where the relative distance is equal to or smaller than the third threshold value and is greater than a fourth threshold value, set the number of the ranging points to a sixth value smaller than the fifth value, and
in a case where the relative distance is equal to or smaller than the fourth threshold value, set the number of the ranging points to a seventh value smaller than the sixth value.

Clause 7. The ranging device according to clause 6, wherein the control circuit sets the number of the ranging points to an eighth value in a third area within the angle of view, and sets the number of the ranging points to the fifth value, the sixth value, or the seventh value based on the relative distance in a fourth area within the angle of view.

Clause 8. The ranging device according to clause 1, wherein the control circuit controls the number of the ranging points based on information on weather.

Clause 9. The ranging device according to clause 8, wherein
the information on the weather is visibility, and
the control circuit is configured to:
   in a case where the visibility is equal to or smaller than a fifth threshold value, set the number of the ranging points to a ninth value;
   in a case where the visibility is greater than the fifth threshold value and is equal to or smaller than a sixth threshold value, set the number of the ranging points to a tenth value greater than the ninth value; and
   in a case where the visibility is greater than the sixth threshold value, set the number of the ranging points to an eleventh value greater than the tenth value.

Clause 10. The ranging device according to clause 8, wherein
the information on weather is a rainfall amount, and
the control circuit is configured to:
   in a case where the rainfall amount is equal to or greater than a seventh threshold value, set the number of the ranging points to a twelfth value,
   in a case where the rainfall amount is smaller than the seventh threshold value and is equal to or greater than an eighth threshold value, set the number of the ranging points to a thirteenth value greater than the twelfth value, and
   in a case where the rainfall amount is smaller than the eighth threshold value, set the number of the ranging points to a fourteenth value greater than the thirteenth value.

Clause 11. The ranging device according to clause 8, wherein
the light source emits third laser light to a fifth area in which the subject does not exist, and
the optical sensor detects fourth laser light corresponding to the third laser light returned from the fifth area.

Clause 12. The ranging device according to clause 11, further comprising a determination circuit configured to determine the weather based on an intensity of the fourth laser light detected by the optical sensor,
wherein the control circuit controls the number of the ranging points based on a result determined by the determination circuit.

Clause 13. The ranging device according to clause 8, further comprising a determination circuit configured to calculate an air permeability between the ranging device and the subject based on a position of the subject, a reflectivity of the first laser light on the subject, and an amount of decrease in the second laser light with respect to the first laser light.

Clause 14. The ranging device according to clause 13, wherein
the determination circuit further determines the weather based on the permeability, and
the control circuit controls the number of the ranging points based on a result determined by the determination circuit.

Clause 15. A ranging system mounted on transport equipment, the ranging system comprising:
the ranging device according to claim 1;
a global navigation satellite system (GNSS) device; and
a first device configured to correct a current position obtained from the GNSS device, using distance information corresponding to the number of the ranging points transmitted from the ranging device.

Clause 16. The ranging system according to clause 15, further comprising: a camera; and a database configured to store a position of the subject, wherein the first device calculates a relative distance between the ranging device and the subject based on the corrected current position, an image obtained from the camera, and a position of the subject obtained from the database.

Clause 17. The ranging system according to clause 16, wherein the first device detects a route in front of the transport equipment based on an image obtained from the camera, and detects an obstacle based on the detected route and the relative distance.

Clause 18. The ranging system according to clause 17 further comprising a second device configured to control travel of the transport equipment based on a result detected by the first device.

Clause 19. The ranging system according to clause 16, wherein the first device detects the subject based on the relative distance, an image obtained from the camera, and a position of the subject obtained from the database.

Clause 20. The ranging system according to clause 15, wherein the transport equipment is a railway vehicle.

While certain arrangements have been described, these arrangements have been presented by way of example only, and are not intended to limit the scope of the inventions. Indeed, the novel arrangements described herein may be embodied in a variety of other forms; furthermore, various omissions, substitutions and changes in the form of the arrangements described herein may be made without departing from the spirit of the inventions. The accompanying claims and their equivalents are intended to cover such forms or modifications as would fall within the scope and spirit of the inventions.

## Claims

1. A ranging device comprising:
a light source (23) configured to emit first laser light;
an optical sensor (26) configured to detect second laser light corresponding to the first laser light reflected by an external subject;
a measurement circuit (27) configured to measure a distance to the subject based on a timing at which the light source emits the first laser light and a timing at which the optical sensor detects the second laser light; and
a control circuit (21) configured to control a number of ranging points indicating a number of distances measured per unit time by the measurement circuit in a predetermined area within an angle of view of the ranging device.

2. The ranging device according to claim 1, wherein the control circuit controls the number of the ranging points based on a relative speed between the ranging device and the subject.

3. The ranging device according to claim 2, wherein the control circuit is configured to:
in a case where the relative speed is equal to or smaller than a first threshold value, set the number of the ranging points to a first value,
in a case where the relative speed is greater than the first threshold value and is equal to or smaller than a second threshold value, set the number of the ranging points to a second value smaller than the first value, and
in a case where the relative speed is greater than the second threshold value, set the number of the ranging points to a third value smaller than the second value.

4. The ranging device according to claim 3, wherein the control circuit sets the number of the ranging points to a fourth value in a first area within the angle of view, and sets the number of the ranging points to the first value, the second value, or the third value based on the relative speed in a second area within the angle of view.

5. The ranging device according to claim 1, wherein the control circuit controls the number of the ranging points based on a relative distance between the ranging device and the subject.

6. The ranging device according to claim 5, wherein the control circuit is configured to:
in a case where the relative distance is greater than a third threshold value, set the number of the ranging points to a fifth value,
in a case where the relative distance is equal to or smaller than the third threshold value and is greater than a fourth threshold value, set the number of the ranging points to a sixth value smaller than the fifth value, and
in a case where the relative distance is equal to or smaller than the fourth threshold value, set the number of the ranging points to a seventh value smaller than the sixth value.

7. The ranging device according to claim 6, wherein the control circuit sets the number of the ranging points to an eighth value in a third area within the angle of view, and sets the number of the ranging points to the fifth value, the sixth value, or the seventh value based on the relative distance in a fourth area within the angle of view.

8. The ranging device according to claim 1, wherein the control circuit controls the number of the ranging points based on information on weather.

9. The ranging device according to claim 8, wherein
the information on the weather is visibility, and
the control circuit is configured to:
in a case where the visibility is equal to or smaller than a fifth threshold value, set the number of the ranging points to a ninth value;
in a case where the visibility is greater than the fifth threshold value and is equal to or smaller than a sixth threshold value, set the number of the ranging points to a tenth value greater than the ninth value; and
in a case where the visibility is greater than the sixth threshold value, set the number of the ranging points to an eleventh value greater than the tenth value.

10. The ranging device according to claim 8, wherein
the information on weather is a rainfall amount, and
the control circuit is configured to:
in a case where the rainfall amount is equal to or greater than a seventh threshold value, set the number of the ranging points to a twelfth value,
in a case where the rainfall amount is smaller than the seventh threshold value and is equal to or greater than an eighth threshold value, set the number of the ranging points to a thirteenth value greater than the twelfth value, and
in a case where the rainfall amount is smaller than the eighth threshold value, set the number of the ranging points to a fourteenth value greater than the thirteenth value.

11. The ranging device according to claim 8, wherein
the light source emits third laser light to a fifth area in which the subject does not exist, and
the optical sensor detects fourth laser light corresponding to the third laser light returned from the fifth area.

12. The ranging device according to claim 11, further comprising a determination circuit (28) configured to determine the weather based on an intensity of the fourth laser light detected by the optical sensor,
wherein the control circuit controls the number of the ranging points based on a result determined by the determination circuit.

13. The ranging device according to claim 8, further comprising a determination circuit (28) configured to calculate an air permeability between the ranging device and the subject based on a position of the subject, a reflectivity of the first laser light on the subject, and an amount of decrease in the second laser light with respect to the first laser light.

14. The ranging device according to claim 13, wherein
the determination circuit further determines the weather based on the permeability, and
the control circuit controls the number of the ranging points based on a result determined by the determination circuit.

15. A ranging system mounted on transport equipment, the ranging system comprising:
the ranging device according to claim 1;
a global navigation satellite system (GNSS) device (32); and
a first device (15) configured to correct a current position obtained from the GNSS device, using distance information corresponding to the number of the ranging points transmitted from the ranging device.
